# EUROPÄISCHE PATENTSCHRIFT

(11) **EP 3 386 932 B1**
(45) Veröffentlichungstag und Bekanntmachung des Hinweises auf die Patenterteilung: **30.09.2020**
(21) Anmeldenummer: 16714766.9
(22) Anmeldetag: 15.03.2016
(51) Int. Cl.: C04B 28/00, C04B 28/06, C04B 28/26, C04B 18/02, C04B 40/00, C04B 20/10, C09K 8/00

(54) **ZUSAMMENSETZUNG ENTHALTEND MODIFIZIERTEN, CHROMATARMEN ROTSCHLAMM SOWIE VERFAHREN ZU DEREN HERSTELLUNG**
COMPOSITION CONTAINING MODIFIED CHROMATE-DEFICIENT RED MUD AND METHOD FOR PRODUCING SAME
COMPOSITION CONTENANT UNE BOUE ROUGE PAUVRE EN CHROMATE ET MODIFIÉE, ET PROCÉDÉ DE FABRICATION

(43) Veröffentlichungstag der Anmeldung: 17.10.2018
(73) Patentinhaber: Fluorchemie GmbH Frankfurt, 50126 Bergheim (DE)
(72) Erfinder: ROCKTÄSCHEL, Christian, 50126 Bergheim (DE)
(74) Vertreter: Schäfer, Matthias W.
(86) Internationale Anmeldenummer: PCT/EP2016/025025
(87) Internationale Veröffentlichungsnummer: WO 2017/157406

(56) Entgegenhaltungen:
- WO-A2-2014/114283
- US-A1- 2013 263 758
- LOPEZ E ET AL: "Adsorbent properties of red mud and its use for wastewater treatment", WATER RESEARCH, ELSEVIER, AMSTERDAM, NL, Bd. 32, Nr. 4, 1. April 1998 (1998-04-01), Seiten 1314-1322, XP004116544, ISSN: 0043-1354, DOI: 10.1016/S0043-1354(97)00326-6
- Vol 39 ET AL: "Environment Protection Engineering EFFECTS OF MODIFICATION AND CALCINATION CONDITIONS ON THE ADSORPTION PERFORMANCE OF RED MUD FOR LOW-CONCENTRATION FORMALDEHYDE IN AIR", , 31. Dezember 2013 (2013-12-31), XP055306511, DOI: 10.5277/EPE130104 Gefunden im Internet: URL:http://epe.pwr.wroc.pl/2013/1-2013/Xia olan_1-2013.pdf [gefunden am 2016-09-29]
- NAN YE ET AL: "Synthesis and Characterization of Geopolymer from Bayer Red Mud with Thermal Pretreatment", JOURNAL OF THE AMERICAN CERAMIC SOCIETY., Bd. 97, Nr. 5, 4. Mai 2014 (2014-05-04), Seiten 1652-1660, XP055306507, US ISSN: 0002-7820, DOI: 10.1111/jace.12840

## Beschreibung

Die vorliegende Erfindung betrifft eine Zusammensetzung enthaltend modifizierten, chromatarmen Rotschlamm sowie Verfahren zu deren Herstellung und Verwendungen.

Aus dem Stand der Technik ist bereits bekannt, dass Rotschlamm aufgrund seiner großen inneren Oberfläche als Adsorbens geeignet ist.

So sind aus der WO 2013/032419 A2 Methoden zur Behandlung von Abwässern mit sulfidierten Rotschlamm-Sorptionsmitteln, insbesondere von Sanitärabwässern, bekannt. Hochwertiges Wasser für Mensch und Tiere und für industrielle Prozesse kann durch Entfernung von Schadstoffen wie Schwermetalle, organische und anorganische Verbindungen etc. mit sulfidiertem Rotschlamm als wirksamen Adsorptionsmittel aus Abwässern industrieller Prozesse, z.B. der Lebensmitteltechnologie, dem Bergbau, dem Transport, gewonnen werden. Zu den weiteren natürlichen und industriellen Schadstoffen in Oberflächen- und Grundwässern gehören Insektizide, Herbizide und Arzneimittelrückstände. Diese können ebenfalls mit den hier beschriebenen Mitteln entfernt werden.

Ferner ist aus der WO 2005/061408 A1 ein poröses, partikuläres Material mit Rotschlamm bzw. Bauxitrückstand zur Fluidbehandlung und Schadstoffentfernung bekannt. Zu den Schadstoffen gehören Schwermetalle, Anionen und Gase.

Allerdings ist die Verwendung des im beschriebenen Stand der Technik verwendeten nicht modifiziertem Rotschlamm als Adsorbens äußerst problematisch. So enthält beispielsweise der als Rohstoff eingesetzte Rotschlamm auf Grund des beim Bayer-Prozess eingesetzten Bauxits nicht unbeträchtliche Mengen an Chrom, das als Cr(VI) und Cr(III) vorliegen kann. Dieses rührt aus dem als Bauxit-Begleiter auftretenden Mineral Chromeisenstein her. Wenn also Rotschlamm beispielsweise als Adsorber für die Immobilisierung von Schwermetallen im Bereich Wasserwerke / Trinkwasseraufbereitung eingesetzt werden soll, muss die Existenz von Cr(VI) eliminiert werden, da Cr(VI) wasserlöslich, toxisch und kanzerogen ist.

Aus der WO 2014/114283 A2 ist ein modifizierter karbonisierter, wahlweise auch rehydratisierter Rotschlamm bekannt, der sich für verschiedene Anwendungen, wie zum Beispiel als schalldämpfendes Material, als Mittel zur Abschirmung von Strahlung, als Beschwerungsmittel in Bohrschlamm, als Pflanzensubstrat bzw. als Düngemittel, eignet. Eine Verwendung des karbonisierten Rotschlamms als Adsorbens wird aber nicht vorgeschlagen. Auch schweigt sich die WO 2014/114283 A2 zu der oben angesprochenen Chromat-Problematik in Rotschlamm aus.

Es ist daher die Aufgabe der vorliegenden Erfindung, eine chemische Zusammensetzung und ein Verfahren zu deren Herstellung zur Verfügung zu stellen, welche die Nachteile des Standes der Technik vermeidet und als iterativ wirkendes Langzeit-Adsorbens für Schadstoffe in flüssigem, gasförmigem und festem Milieu geeignet ist.

Diese Aufgabe wird durch die Merkmale der Zusammensetzung nach Anspruch 1 und ein Verfahren mit den Merkmalen des Anspruchs 17 gelöst. Vorteilhafte Weiterbildungen der Erfindung sind in den abhängigen Ansprüchen angegeben. Hierdurch wird insbesondere eine kostengünstige chemische Zusammensetzung als iterativ wirkendes Langzeit- Adsorbens für Schadstoffe in flüssigem, gasförmigem und festem Milieu bereitgestellt.

Nachfolgend soll mit den Formulierungen "umfassend" bzw. "aufweisend" insbesondere auch die Formulierung "im Wesentlichen bestehend aus" sowie "bestehend aus" beinhaltet sein. Außerdem ist bei den angegebenen Verfahren insbesondere auch die angegebene Reihenfolge beansprucht.

Gemäß der vorliegenden Erfindung wird eine Zusammensetzung zur Verfügung gestellt, enthaltend modifizierten, chromatarmen Rotschlamm mit einer mineralischen Zusammensetzung von
- 10 bis 50 Gewichtsprozent Eisenverbindungen,
- 12 bis 35 Gewichtsprozent Aluminiumverbindungen,
- 5 bis 17 Gewichtsprozent Siliziumverbindungen,
- 2 bis 10 Gewichtsprozent Titandioxid,
- 0,5 bis 6 Gewichtsprozent Calciumverbindungen,
- 0 bis 1 ppm an Chrom(VI)-Verbindungen und
- gegebenenfalls weitere unvermeidbare Verunreinigungen,
wobei die Zusammensetzung, insbesondere der modifizierte, chromatarme Rotschlamm, ein schwerlösliches Reduktionsmittel für Cr(VI) enthält, wobei das schwerlösliche Reduktionsmittel für Cr(VI) eine Löslichkeit in Wasser bei pH 7 und 25°C von weniger als 1 g/l aufweist, wobei die Zusammensetzung ferner ein pH-Puffersystem umfasst, das zum Stabilisieren eines pH-Bereichs, in dem das schwerlösliche Reduktionsmittel für Cr(VI) und das daraus entstandene Cr(III) eine Löslichkeit in Wasser bei 25°C von weniger als 1 g/l aufweist, konfiguriert ist.

Die Erfinder der vorliegenden Erfindung haben insbesondere herausgefunden, dass mittels eines schwerlöslichen Reduktionsmittels für Cr(VI) eine (Re-)Oxidation von Cr(III) zu Cr(VI) in dem modifizierten Rotschlamm bzw. der diesen enthaltenden Zusammensetzung dauerhaft verhindert werden kann. Ohne an eine Theorie gebunden sein zu wollen, gehen die Erfinder der vorliegenden Erfindung davon aus, dass dies dadurch ermöglicht wird, dass auf Grund der Schwerlöslichkeit nur ein kleiner prozentualer Anteil des Reduktionsmittels in einer reaktiven Form (z.B. als Ionen in gelöster Form) vorliegt, während der überwiegende Teil des Reduktionsmittels in einer nicht unmittelbar reaktiven Form (z.B. als Feststoff) vorliegt und somit gewissermaßen ein Depot an Reduktionsmittel vorhanden ist, das über einen langen Zeitraum (bzw. dauerhaft) eine (Re-)Oxidation von Cr(III) zu Cr(VI) in dem modifizierten Rotschlamm bzw. der erfindungsgemäßen Zusammensetzung verhindern kann. Auf Grund der Schwerlöslichkeit des Reduktionsmittels kann es insbesondere möglich sein, dass nur gerade die für die Verhinderung einer (Re-)Oxidation von Cr(III) zu Cr(VI) erforderliche Menge an Reduktionsmittel in einer reaktiven Form vorliegt und bei Bedarf (z.B. bei Verbrauch der reaktiven Form des Reduktionsmittels durch Oxidation) die reaktive Form über eine Gleichgewichtsverschiebung automatisch aus der nicht unmittelbar reaktiven Form nachgebildet werden kann.

Folglich ist in allen Anwendungen, in denen die erfindungsgemäße Zusammensetzung eingesetzt wird, die Gefahr mit Chrom(VI) in Kontakt zu kommen oder es zu inkorporieren nahezu ausgeschlossen. Diese Tatsache kann nicht hoch genug geschätzt werden, da bei Verwendung der erfindungsgemäßen Zusammensetzung in den genannten Anwendungen es zum ersten Mal möglich ist, ein aus Rotschlamm hergestelltes Produkt in Wirtschaftskreisläufen einsatzfähig zu machen. Weiterhin sind alle bisherigen Versuche aus Rotschlamm (RS) einen technisch einsatzfähigen Wertstoff zu erzeugen, gescheitert, da bei Verwendung von gewöhnlichem RS immer alle in ihm enthaltenden Schadstoffe in die Bio-/ Lithosphäre gelangen (können). Weiterhin sind aus konventionellem Rotschlamm hergestellte Materialien an den gesetzgeberischen Grenzen (Höchstwerte TA Wasser / TA Luft; TrinkwasserVerordnung) regelmäßig gescheitert. Als Beispiel dient der Bauxol-Skandal in der australischen Landwirtschaft. Auch einem Einsatz von Rotschlamm als Bestandteil von Baumaterialien stand bislang eine als "Maurer-Krätze" bezeichnete, diverse Chromat-Nekrosen betreffende Berufskrankheit entgegen.

Insbesondere kann die erfindungsgemäße Zusammensetzung einen modifizierten, chromatarmen Rotschlamm mit einem Gehalt an Chrom(VI)-Verbindungen von weniger als 0,75 ppm, insbesondere von weniger als 0,5 ppm, insbesondere von weniger als 0,25 ppm, insbesondere von weniger als 0,1 ppm, insbesondere von weniger als 0,05 ppm, insbesondere von weniger als 0,02 ppm, insbesondere von weniger als 0,01 ppm, aufweisen.

Eine vorteilhafte Weiterbildung der Erfindung sieht vor, dass das schwerlösliche Reduktionsmittel für Cr(VI) eine Löslichkeit in Wasser bei pH 7 und 25°C von weniger als 0,5 g/l, insbesondere weniger als 0,1 g/l, aufweist. Hierdurch können die oben beschriebenen Effekte auf Grund der Schwerlöslichkeit des Reduktionsmittels in besonders effektiver Weise ausgenutzt werden.

Eine weitere vorteilhafte Weiterbildung der Erfindung sieht vor, dass das schwerlösliche Reduktionsmittel für Cr(VI) eine schwerlösliche Fe(II)-Verbindung umfasst. Hierdurch kann beispielsweise ein besonders kostengünstiges Reduktionsmittel vorgesehen werden, das darüber hinaus keine zusätzliche (d.h. nicht ohnehin vorhandene) Art an Kationen in die Zusammensetzung einführt. Des Weiteren kann hierdurch ein besonders effektives Redoxsystem, nämlich Fe(II) / Fe(III), für Cr(VI) bereitgestellt werden.

Auf Grund seiner Stellung in der Spannungsreihe ist gemäß den folgenden Gleichungen das Redoxsystem Fe(II) / Fe(III) in der Lage, Cr(VI) im Wesentlichen vollständig (quantitativ) zu Cr(III) zu reduzieren, das anschließend beispielsweise als ein gemischtes Fe-Cr-Hydroxid | Oxidhydrat ausfällt.

| | | |
|---|---|---|
| Fe²⁺ | → Fe³⁺ + 1 e⁻ | mit E(o) = 0,77 V |
| bzw. | | |
| Cr₂O₇²⁻ + 14 H⁺ +6 e⁻ | → 2 Cr³⁺ + 7 H₂O | mit E(o) = 1,232 V |
| bzw. | | |
| HCrO₄⁻ + 7 H⁺ + 3 e⁻ | → Cr³⁺ + 4 H₂O | mit E(o) = 1,350 V |

Cr(VI) ist also allenfalls nur noch im Bereich der Nachweisgrenze vorhanden. Solange also beispielsweise Fe(II)-Ionen im Überschuss vorhanden sind, kann Cr(VI) nicht existieren. Diese überraschende Erkenntnis ermöglicht erst die Verwendung der erfindungsgemäßen Zusammensetzung im Bereich Adsorption / Immobilisierung von Schadstoffen im Wasser, in der Luft und im festen Bereich, wie z. B. bei Agro-Anwendungen und im gesamten Baubereich, wenn dort auf die Minimierung von Chrom(VI) gezielt hingearbeitet werden muss.

Vorteilhafterweise sieht eine Ausführungsform der Erfindung vor, dass das schwerlösliche Reduktionsmittel für Cr(VI) Eisen(II)carbonat (Fe₂CO₃, Siderit) umfasst, was in besonders einfacher und kostengünstiger Weise bereitgestellt werden kann und eine besonders vorteilhafte (Schwer-)Löslichkeit in Wasser bei pH 7 und 25°C aufweist.

Noch eine vorteilhafte Ausführungsform der erfindungsgemäßen Zusammensetzung sieht vor, dass darin eine Kombination aus leichtlöslichen und schwerlöslichen Fe(II)-Verbindungen enthalten ist, wobei unter leichtlöslichen Fe(II)-Verbindungen solche mit einer Löslichkeit in Wasser bei pH 7 und 25°C von mehr als 1 g/l, insbesondere mehr als 5 g/l, insbesondere mehr als 10 g/l, und unter schwerlöslichen Fe(II)-Verbindungen solche mit einer Löslichkeit in Wasser bei pH 7 und 25°C von weniger als 1 g/l, insbesondere weniger als 0,5 g/l, insbesondere weniger als 0,1 g/l, verstanden werden können.

Eine weitere vorteilhafte Ausführungsform der Erfindung sieht vor, dass der modifizierte, chromatarme Rotschlamm einen modifizierten, chromatarmen, karbonisierten Rotschlamm umfasst, bei dem das Gewichtsverhältnis von Fe(II)carbonat zu den Oxiden des Eisens mindestens 1, insbesondere mindestens 1,5, insbesondere mindestens 2, ist. Hierdurch kann insbesondere ein besonders kostengünstig herstellbarer modifizierter chromatfreier Rotschlamm eingesetzt werden, der zudem besonders vorteilhafte Eigenschaften für manche Verwendungen der Zusammensetzung aufweist.

Eine weitere vorteilhafte Ausführungsform der Erfindung sieht vor, dass der modifizierte, chromatarme Rotschlamm einen modifizierten, chromatarmen, karbonisierten und rehydratisierten Rotschlamm umfasst, bei dem das Gewichtsverhältnis von Fe(II)carbonat zu den Oxiden des Eisens mindestens 1, insbesondere mindestens 1,5, insbesondere mindestens 2, ist und das Gewichtsverhältnis der Summe von Eisenhydroxid und Eisenoxidhydrat zu den Oxiden des Eisens mindestens 1, insbesondere mindestens 1,5, insbesondere mindestens 2, ist. Auch hierdurch kann insbesondere ein besonders kostengünstig herstellbarer modifizierter chromatfreier Rotschlamm eingesetzt werden, der zudem besonders vorteilhafte Eigenschaften für manche Verwendungen der Zusammensetzung aufweist, wie zum Beispiel eine flammhemmende Wirkung über einen weiten Temperaturbereich.

Die Zusammensetzung umfasst ferner ein pH-Puffersystem, das zum Stabilisieren eines pH-Bereichs, in dem das schwerlösliche Reduktionsmittel für Cr(VI) und das daraus entstandene Cr(III) eine Löslichkeit in Wasser bei 25°C von weniger als 1 g/l, insbesondere weniger als 0,5 g/l, insbesondere weniger als 0,1 g/l, aufweist, konfiguriert ist. Hierdurch können die oben beschriebenen Effekte auf Grund der Schwerlöslichkeit des Reduktionsmittels in besonders effektiver Weise ausgenutzt werden und zusätzlich auf Grund der Schwerlöslichkeit der enstandenen Cr(III)-Verbindung eine (Re-)Oxidation von Cr(III) zu Cr(VI) weiter erschwert werden. Insbesondere kann es vorteilhaft sein, wenn das pH-Puffersystem zum Stabilisieren (bzw. im Wesentlichen Konstanthalten) des pH-Werts im Bereich von pH 5 bis 10, insbesondere im Bereich von pH 6 bis 9, konfiguriert ist.

Eine weitere vorteilhafte Ausführungsform der Erfindung sieht vor, dass der modifizierte, chromatarme Rotschlamm eine spezifische Oberfläche im Bereich von 2 bis 250 m²/g (gemessen nach BET), insbesondere von 10 bis 200 m²/g (gemessen nach BET), aufweist. Hierdurch kann der modifizierte, chromatarme Rotschlamm beispielsweise in besonders vorteilhafter Weise zur Verwendung als Adsorbens geeignet sein, wie zum Beispiel bei der Reinigung von flüssigen oder gasförmigen Medien.

Eine weitere vorteilhafte Ausführungsform der Erfindung sieht vor, dass der modifizierte, chromatarme Rotschlamm ein spezifisches Gewicht von mindestens 4,5 g/cm³, insbesondere von mindestens 5 g/cm³, insbesondere von mindestens 5,3 g/cm³, aufweist. Hierdurch kann der modifizierte, chromatarme Rotschlamm beispielsweise in besonders vorteilhafter Weise zur Abschirmung bzw. Abschwächung von radioaktiven und/oder elektromagnetischen Strahlen oder zur Verwendung als Bohrlochbeschwerungsmittel geeignet sein.

Eine weitere vorteilhafte Ausführungsform der Erfindung sieht vor, dass die Zusammensetzung, insbesondere der modifizierte, chromatarme Rotschlamm, im Wesentlichen in der Form eines Granulats vorliegt. Eine Granulierung der erfindungsgemäßen Zusammensetzung kann auch mit weiteren Zusätzen für spezielle Anwendungen erfolgen, wie z.B. Harnstoff und/oder Aminosulfonsäure, um neben der Nitrat-Reduktion auch gleichzeitig Nitrit zu zerstören. Durch eine Überführung der erfindungsgemäßen Zusammensetzung in beliebige geeignete Formkörper, wie z.B. Granulate, stehen dem Endanwender gut handhabbare Produkte für viele Anwendungen wie z.B. im Bereich Adsorption, in der Landwirtschaft oder als Feuerlöschmittel, insbesondere für Flächenbrände, wie Wald- bzw. Torfbrände, zur Verfügung.

Eine weitere vorteilhafte Ausführungsform der Erfindung sieht vor, dass die Zusammensetzung, insbesondere der modifizierte, chromatarme Rotschlamm, zumindest teilweise eine Oberflächenmodifizierung aufweist, insbesondere zumindest teilweise mit einer Oberflächenbeschichtung versehen ist. Hierdurch kann der modifizierte, chromatarme Rotschlamm beispielsweise für manche Anwendungen als Adsorbens in besonders vorteilhafter Weise modifiziert werden.

Eine weitere vorteilhafte Ausführungsform der Erfindung sieht vor, dass die Zusammensetzung ferner ein weiteres Reduktionsmittel für Cr(VI) enthält, das insbesondere aus der Gruppe, bestehend aus Fe, Al und Zn, ausgewählt ist und vorzugsweise in feinverteilter Form vorliegt. Hierdurch kann insbesondere ein besonders schnell wirkendes Redoxsystem zur Verfügung gestellt werden, dass besonders schnell und effektiv Cr(VI) zu Cr (III) oder aber auch Nitrat zu Nitrit reduzieren kann.

Durch Zusetzen von feinstem Eisenpulver, Zinkpulver oder Aluminium Pyroschliff, entsteht gemäß den folgenden Gleichungen:

| | | | |
|---|---|---|---|
| Al | → | Al⁺ + 3 e⁻ | mit E(o) = - 1,662 V |
| Fe | → | Fe²⁺ + 2 e⁻ | mit E(o) = - 0,447 V |
| Fe | → | Fe³⁺ + 3 e⁻ | mit E(o) = - 0,037 V |
| Zn | → | Zn²⁺ + 2 e⁻ | mit E(o) = - 0,76 V |

jeweils ein geeignetes Redoxsystem für Cr(VI) zu Cr (III). Die dabei ggf. auftretende Gasentwicklung (wie z.B. H₂) kann dann zur Erhöhung der Porosität der erfindungsgemäßen Zusammensetzung und somit zur Vergrößerung der inneren Oberfläche ausgenutzt werden.

Eine weitere vorteilhafte Ausführungsform der Erfindung sieht vor, dass die Zusammensetzung ferner ein Mittel zum Entfernen von Nitrat und Nitrit enthält, das insbesondere aus der Gruppe, bestehend aus Harnstoff und/oder Amidosulfonsäure, ausgewählt ist. Hierdurch kann der modifizierte, chromatarme Rotschlamm beispielsweise in besonders vorteilhafter Weise zur Reinigung von Wasser bzw. zur Wasseraufbereitung geeignet sein.

Eine weitere vorteilhafte Ausführungsform der Erfindung sieht vor, dass die Zusammensetzung ferner ein Mittel enthält, das zum Entfernen von Schadstoffen, insbesondere von Schwermetallen, mittels Bildung schwerlöslicher Salze konfiguriert ist, und insbesondere ein Sulfid umfasst. Hierdurch kann der modifizierte, chromatarme Rotschlamm beispielsweise in besonders vorteilhafter Weise zur selektiven Adsorption von Anionen und/oder Kationen (zum Beispiel von Schwermetallen, wie z.B. Cadmium, mittels Sulfiden unter Immobilisierung als CdS) geeignet sein.

Eine weitere vorteilhafte Ausführungsform der Erfindung sieht vor, dass die Zusammensetzung ferner ein Mittel enthält, insbesondere eine organische Substanz, die bei thermischer Behandlung Aktivkohle auf der Oberfläche bildet. Dabei kann die Aktivkohlebeschichtung auf den Primärpartikeln der Zusammensetzung ausgebildet werden und der Adsorption von Pharmazeutika, Herbiziden, Hormonen, etc. dienen.

Ein erfindungsgemäßes Verfahren zur Herstellung einer erfindungsgemäßen Zusammensetzung umfasst die folgenden Schritte:
a) Bereitstellen von (vorzugsweise neutralisiertem) Rotschlamm, vorzugsweise gewaschen bzw. im neutralen pH Bereich,
b) Zugeben eines schwerlöslichen Reduktionsmittels für Cr(VI) zu dem Rotschlamm und Vermischen des schwerlöslichen Reduktionsmittels für Cr(VI) mit dem Rotschlamm, wobei das schwerlösliche Reduktionsmittel für Cr(VI) eine Löslichkeit in Wasser bei pH 7 und 25°C von weniger als 1 g/l aufweist,
c) Reduzieren von in dem Rotschlamm enthaltenen Chrom(VI)-Verbindungen mittels des schwerlöslichen Reduktionsmittels für Cr(VI) zu Chrom(III)-Verbindungen in wässrigen Systemen unter Erhalt eines modifizierten, chromatarmen Rotschlamms,
wobei das Verfahren ferner ein Zugeben eines pH-Puffersystem umfasst, das zum Stabilisieren eines pH-Bereichs, in dem das schwerlösliche Reduktionsmittel für Cr(VI) und das daraus entstandene Cr(III) eine Löslichkeit in Wasser bei 25°C von weniger als 1 g/l aufweist, konfiguriert ist.

Eine vorteilhafte Weiterbildung des Verfahrens sieht vor, dass in Schritt b) eine schwerlösliche Fe(II)-Verbindung, insbesondere Fe(II)-Carbonat, als Reduktionsmittel für Cr(VI) zugegeben wird, wobei die schwerlösliche Fe(II)-Verbindung eine Löslichkeit in Wasser bei pH 7 und 25°C von weniger als 1 g/l aufweist, wobei in Schritten nacheinander Chrom (VI)- Verbindungen zu Chrom (III)-Verbindungen reduziert werden, wodurch zusätzlich Fe(III)-Hydroxid | Oxidhydrat iterativ gebildet wird.

Ein weiteres erfindungsgemäßes Verfahren zur Herstellung einer erfindungsgemäßen Zusammensetzung umfasst die folgenden Schritte:
a) Bereitstellen von (vorzugsweise neutralisiertem) Rotschlamm, vorzugsweise gewaschen bzw. im neutralen pH Bereich,
b) Reduzieren der in dem Rotschlamm enthaltenen Eisen(III)-Verbindungen zu Eisen(II)-Verbindungen und der in dem Rotschlamm enthaltenen Chrom(VI)-Verbindungen zu Chrom(III)-Verbindungen in wässrigen Systemen ,
c) Zugeben einer Carbonatverbindung zu der in Schritt b) erhaltenen, Eisen(II)-Verbindungen enthaltenden Lösung unter Bildung von Eisen(II)carbonat, wodurch beispielsweise eine Re-oxidation von Chrom (III) zu Chrom (VI) verhindert werden kann,
wobei das Verfahren ferner ein Zugeben eines pH-Puffersystem umfasst, das zum Stabilisieren eines pH-Bereichs, in dem das Eisen(II)carbonat und das daraus entstandene Cr(III) eine Löslichkeit in Wasser bei 25°C von weniger als 1 g/l aufweist, konfiguriert ist.

Hierdurch kann beispielsweise in besonders vorteilhafter Weise eine Zusammensetzung mit einem modifizierten, chromatarmen, karbonisierten Rotschlamm erhalten werden.

Eine vorteilhafte Weiterbildung der Verfahren sieht ferner ein Rehydratisieren durch Oxidation von Fe(II)-Verbindungen zu Fe(III)-Verbindungen in wässriger Lösung vor. Hierdurch kann beispielsweise in besonders vorteilhafter Weise eine Zusammensetzung mit einem modifizierten, chromatarmen, karbonisierten und rehydratisierten Rotschlamm erhalten werden.

Eine weitere vorteilhafte Weiterbildung der Verfahren sieht ferner ein Tempern des modifizierten, chromatarmen Rotschlamms bei einer Temperatur im Bereich von 450 °C bis 700 °C vor. Durch die thermische Aktivierung kann die innere Oberfläche und/oder die Dichte vergrößert werden und ggf. sogar Magnetit erzeugt werden. Allerdings sind hierbei Grenzen zu beachten, z.B. durch Zersetzung von Rest-ATH zu Al₂O₃ oder durch Einsetzen von Sinterprozessen (ab 700°C), die die innere Oberfläche reduzieren können.

Eine weitere vorteilhafte Weiterbildung der Verfahren sieht ferner ein Behandeln des modifizierten, chromatarmen Rotschlamms mit Säure vor. Eine saure Aktivierung durch Behandlung des Rotschlamms mit Säuren kann vorteilhafterweise durchgeführt werden, um durch die Entfernung von Sodaliten, Hydroxiden und Carbonaten etc. die innere Oberfläche zu vergrößern. Hierbei sind durch die Löslichkeit einzelner Rotschlamm-Bestandteile Grenzen gesetzt.

Eine weitere vorteilhafte Weiterbildung der Verfahren sieht ferner ein thermisches Behandeln des modifizierten, chromatarmen Rotschlamms bei einer Temperatur im Bereich von 150 °C bis 350 °C vor. Hierdurch kann das spezifische Gewicht der Zusammensetzung erhöht werden.

Eine weitere vorteilhafte Weiterbildung der Verfahren sieht ferner ein Granulieren der Zusammensetzung, insbesondere des modifizierten, chromatarmen Rotschlamms, vor. Hierdurch kann die Zusammensetzung beispielsweise in eine für den Endanwender gut handhabbare Form gebracht werden, die für viele Anwendungen wie z.B. im Bereich Adsorption, in der Landwirtschaft oder als Feuerlöschmittel, insbesondere für Flächenbrände, wie Wald- bzw. Torfbrände, besonders gut geeignet sein kann.

Eine weitere vorteilhafte Weiterbildung der Verfahren sieht ferner eine Oberflächenbehandlung, insbesondere eine Oberflächenbeschichtung, der Zusammensetzung, insbesondere des modifizierten, chromatarmen Rotschlamms, vor. Hierdurch kann der modifizierte, chromatarme Rotschlamm beispielsweise für manche Anwendungen als Adsorbens in besonders vorteilhafter Weise modifiziert werden.

Eine weitere vorteilhafte Weiterbildung der Verfahren sieht ferner ein Zugeben von mindestens einem der folgenden Mittel vor:
- ein weiteres Reduktionsmittel für Cr(VI), das insbesondere aus der Gruppe, bestehend aus Fe, Al und Zn, ausgewählt ist,
- ein Mittel zum Entfernen von Nitrat und Nitrit, das insbesondere aus der Gruppe, bestehend aus Harnstoff und/oder Amidosulfonsäure, ausgewählt ist,
- ein Mittel, das zum Entfernen von Schadstoffen, insbesondere von Schwermetallen, mittels Bildung schwerlöslicher Salze konfiguriert ist, und insbesondere ein Sulfid umfasst, und
- eine organische Substanz, die bei thermischer Behandlung Aktivkohle auf der Oberfläche bildet.

Eine weitere vorteilhafte Weiterbildung der Verfahren sieht ferner einen Trocknungsschritt vor, insbesondere in im Wesentlichen nicht-oxidierender Atmosphäre, wie zum Beispiel unter Inertgas. Hierdurch kann beispielsweise eine besonders gut lagerfähige Zusammensetzung erhalten werden, die hierfür zusätzlich vorzugsweise luftdicht und/oder unter Inertgas oder vakuumiert verpackt ist.

Eine erfindungsgemäße Ausführungsform der Erfindung sieht die Verwendung der erfindungsgemäßen Zusammensetzung als Adsorbens, insbesondere als iterativ wirkendes Langzeit-Adsorbens vor.

Ferner sieht eine vorteilhafte Weiterbildung der Erfindung die Verwendung der erfindungsgemäßen Zusammensetzung zur Reinigung von flüssigen und/oder gasförmigen Medien, insbesondere zur Reinigung von Wasser bzw. zur Wasseraufbereitung und/oder zur Reinigung von Luft, vor. Dabei kann die erfindungsgemäße Zusammensetzung zur Entfernung von mindestens einem aus der Gruppe, bestehend aus Nitrat, Nitrit, Phosphat, Schwermetallen, polyaromatische Kohlenwasserstoffen (PAK), Pharmaka-Metabolite und pathogenen Keimen, aus wässrigen Systemen verwendet werden. Außerdem kann die erfindungsgemäße Zusammensetzung zur Entfernung von mindestens einem Stoff aus der Gruppe, bestehend aus Feinstaub, Schadstoffen und Geruchsstoffen, aus gasförmigen Systemen verwendet werden.

Ferner sieht eine vorteilhafte Weiterbildung der Erfindung die Verwendung der erfindungsgemäßen Zusammensetzung in der Landwirtschaft, insbesondere zur Wachstumsförderung und/oder als Bodenverbesserungsmittel bzw. zur Bodenentgiftung.

Ferner sieht eine vorteilhafte Weiterbildung der Erfindung die Verwendung der erfindungsgemäßen Zusammensetzung als halogenfreies Flammschutzmittel und/oder als Feuerlöschmittel, insbesondere für Flächenbrände, wie Wald- bzw. Torfbrände, vor. Beim Einsatz der erfindungsgemäßen Zusammensetzung als Flammschutzmittel für Flächenbrände wie z.B. in Wäldern wirken die in der erfindungsgemäßen Zusammensetzung enthaltenen Redox-Systeme sowie das Adsorptionsvermögen für Schadstoffe wie Cr(VI) oder Schwermetalle der Einbringung dieser in die Biosphäre entgegen. Die erfindungsgemäße Zusammensetzung kann daher nach dem erfolgreichen Löschen des Brandes am Platz des Ereignisses verbleiben. Sie wirkt sogar als Förderung-/ Wuchsmittel für die Sekundärvegetation in Feld, Wald, Moor und Steppe. Zusätzlich wird durch die erfindungsgemäße Zusammensetzung die Windverfrachtung der Bodenkrume unmittelbar nach dem Ereignis minimiert. Damit gibt es zum ersten Mal ein großflächig verwendbares Feuerlöschmittel, welches kostengünstig und nicht umweltschädlich, sondern biologisch-umwelttechnisch nützlich ist.

Ferner sieht eine vorteilhafte Weiterbildung der Erfindung die Verwendung der erfindungsgemäßen Zusammensetzung in Baumaterialien, insbesondere zu mindestens einem der folgenden:
- zum Flammschutz
- zur Wärmedämmung
- zur Wärmespeicherung
- zur Schalldämmung
- zur Abschirmung bzw. Abschwächung von radioaktiven und/oder elektromagnetischen Strahlen, vor.

Ferner sieht eine vorteilhafte Weiterbildung der Erfindung die Verwendung der erfindungsgemäßen Zusammensetzung als Bohrlochbeschwerungsmittel vor. Bisher stellten die Bohrbeschwerungsmittel auf Basis Schwerspat (Bariumsulfat, gemahlen) durch den inhärenten Anteil an kritischen Schwermetallen wie Quecksilber, Uran oder Thorium ein wichtiges Gegenargument zur Verwendung derselben in der Bohrtechnologie/ Fracking dar. Mit der erfindungsgemäßen Zusammensetzung und der sich anschließenden Vielfalt an möglichen Oberflächenbeschichtungen zur Kontrolle der Rheologie, Thixotropie und Separierbarkeit sind Umweltgefahren wie z.B. Kontamination der Umwelt (Untertage- Wasserhorizonte) weitgehend ausgeschlossen, da die erfindungsgemäße Substanz einerseits den Kriterien der TrinkwasserVerordnung genügt und deren Grenzwerte unterschreitet, als auch alle durch den aktuellen Bohrvorgang in der Bohrumgebung freigesetzten Schadstoffe (Schwermetalle, die durch das Abteufen mobilisiert worden sind) permanent adsorbiert, immobilisiert und damit der Bio-Verfügbarkeit entzieht. Damit ist das bisher gravierendste, umweltbezogene Argument aller "Fracking-Gegner" und "Umwelt-Aktivisten" konterkariert. Damit ist ein bei der konventionellen Bohrtechnik bisher unerreichbarer Zustand der Umweltschonung gegeben.

Ferner sieht eine vorteilhafte Weiterbildung der Erfindung die Verwendung der erfindungsgemäßen Zusammensetzung als Geopolymer bzw. zur Herstellung von Geopolymeren, insbesondere mittels Kaliwasserglas, vor. Das erschöpfte, mit Schadstoffen beladene Adsorbenz kann entweder beim "Sekundär-Mining" als Rohstoffquelle (Extraktion mit z. B. 1M HN03 oder 1 M NaOH) oder in der Endlagerung / Bergwerksverfüllung in Form von Geopolymeren weiterverwendet/endverwendet werden. In den Geopolymeren sind dann die adsorbierten Schadstoffe dauerhaft immobilisiert.

Weitere, die Erfindung verbessernde Maßnahmen werden nachstehend in der detaillierten Beschreibung der Erfindung anhand von bevorzugten Ausführungsbeispielen näher dargestellt. Diese sind aber keinesfalls so auszulegen, dass sie die Erfindung, wie sie insbesondere in den Ansprüchen dargelegt ist, in irgendeiner Weise einschränken.

Die erfindungsgemäße Zusammensetzung ist durch drei wesentliche Eigenschaften gekennzeichnet:
1) Die erfindungsgemäße Zusammensetzung hat eine große innere (BET) Oberfläche. Aufgrund dieser Tatsache werden Stoffe adsorbiert. Die Stoffe werden im Wesentlichen durch physikalische Kräfte an der Oberfläche gebunden.
2) Die erfindungsgemäße Zusammensetzung ist schwer und ihre Dichte kann durch Tempern bis auf einen Wert > 5,3 g/cm³ gesteigert werden. Die gezielte Bildung von bspw. Magnetit ist für manche Anwendungen in der Gebäudetechnik wie Schall-Dämmung, Strahlenschutz, Bohrtechnologie, Schwerbeton und EMP-Anwendungen wesentlich.
3) Die erfindungsgemäße Zusammensetzung enthält aufgrund ihrer chemischen Zusammensetzung, (Aluminiumhydroxid / oxidhydrat und Eisen- hydroxid /oxidhydrat) Al(III) und Fe(III) Ionen. Diese Kationen fällen bestimmte Anionen aufgrund des niedrigen Löslichkeitsprodukts als schwerlösliche Salze aus. Hierzu gehören Aluminium- und Eisen-Phosphat. Dieser Tatbestand ist von großer Bedeutung, da so z. B. die durch Phosphat erzeugte Eutrophierung vermieden wird (siehe das Phosphatverbot in z.B. Detergentien als "Builder"-Systeme für Waschmittel).

Durch zu hohen Phosphatgehalt werden Oberflächengewässer überernährt. Durch massives Wachstum und nachfolgendes Absterben wird der Sauerstoffgehalt reduziert und "tote" Gewässer entstehen. Umgekehrt wird in Zukunft per Gesetzgebung Phosphat rückzugewinnen sein, da die Phosphatvorräte weltweit schrumpfen ("peak phosphorous in 2013") und Phosphorverbindungen / Phosphate der essenziellste Pflanzendünger ist, der nicht substituiert werden kann.

Erfindungsgemäß kann die Zusammensetzung Eisen(II)carbonat enthalten, der bei der Carbonisierung des Rotschlamms entsteht. Mit Existenz von Eisen(II)carbonat sind in der erfindungsgemäßen Zusammensetzung auch Eisen(II)-Ionen vorhanden. Der Siderit hat eine Löslichkeit von 6,7 x 10 (hoch minus 3) %. Somit sind zu jeder Zeit pro Liter Wasser 67 ppm Eisen(II)carbonat gelöst.
Somit liegen in der erfindungsgemäßen Zusammensetzung Al(III), Fe(III) und Fe(II)-Ionen vor. Die letzteren beiden bilden ein Redoxsystem

Fe(II) → Fe(III) + 1 e Eo = 0,77 eV

Das Vorliegen eines Redoxsystems in der erfindungsgemäßen Zusammensetzung ermöglicht eine völlig neue Art von Reduktion, Ausfällung und/oder Adsorption. Die Redoxreaktionen gehorchen den Gesetzen der Spannungsreihe (Nernst'sches Gesetz). Danach können alle Substanzen mit einem höheren Elektronenpotential reduziert werden, alle Substanzen mit einem niedrigeren werden oxidiert. Im Fall der Reduktion geht Fe(II) in Fe(III) über, und im Fall der Oxidation geht Fe(III) in Fe(II) über.

Dieser Tatbestand ist fundamental für den Einsatz in der erfindungsgemäßen Zusammensetzung bspw. in der Wasserbehandlung. Ungewaschener Rotschlamm enthält teilweise beträchtliche Mengen an Chrom, das sowohl als Cr(III) als auch als Cr(VI) vorliegen kann. Letzteres ist hoch giftig und kanzerogen. Es darf laut Trinkwasserverordnung von 2012 nur in einer Grenzkonzentration von < 0,05 ppm vorliegen. Da das Redoxpotential mit 1,350 eV deutlich über dem Redoxpotential von Fe(II) / Fe(III) (0,770 eV) liegt, reduziert das Fe(II) das Cr(VI) zu Cr(III). Weiterhin fällt das Cr(III) bei einem pH zwischen 7 und 8 als schwerlösliches Cr-Hydroxidhydrat aus, bzw. kann mit dem Fe(III)hydroxidhydrat schwerlösliches Misch-hydroxidhydrat bilden. Die Anwesenheit der Fe(II)carbonat-Phase garantiert folglich, dass Cr(VI) gar nicht existieren kann, und Cr(III) ausgefällt wird. Somit wird die erfindungsgemäße Zusammensetzung zu einem entsprechend der Trinkwasserverordnung gefahrlosen Reinigungs-/Adsorptionsmittel, das durch Reduktion, Fällung und Adsorption wirken kann.

Die Fe(II), Fe(III) und Al(III)-Ionen bilden sich gemäß Löslichkeitsprodukt aus den Phasen Siderit, Eisenhydroxid/Oxidhydrat bzw. Aluminiumhydroxid /- oxidhydrat im Gleichgewicht nach, wenn Fe(II), Fe(III) oder Al(III) verbraucht wurden.

Dieser Tatbestand hat überraschenderweise eine für die Adsorption äußerst wichtige Konsequenz: Wenn Fe(II) andere Substanzen reduziert, wird es zu Fe(III) oxidiert und bildet in wässrigen Systemen Fe(III) hydroxid, welches vorerst als eine Art Schleim mit entsprechend hoher Adsorptionskraft ausfällt. Das so frisch ("in situ") entstehende Adsorptionsmittel kann nun wiederum adsorbieren. Die adsorbierten Substanzen können wieder reduziert werden, wobei sich erneut weiteres Adsorptionsmittel bildet, das wieder adsorbiert, etc. Mit anderen Worten: Es liegt ein iterativer Langzeitadsorber bzw. ein Adsorberdepot vor, der/das so lange wirksam ist, wie die Fe(II)-Quelle existent ist und entsprechende Redoxvorgänge ablaufen.

Dieser vorstehend beschriebene iterative Prozess ist ein Kernbestandteil dieser Erfindung, weil er die Effizienz der dargestellten, erfindungsgemäßen Zusammensetzung sehr steigert und die Anwendungsbreite, z. B. in der Adsorption, hochgradig erweitert.

Weitere Erkenntnisse bestehen darin, dass der Rotschlamm weiteren chemischen Modifizierungen unterzogen werden kann. Durch Zusatz von Eisen-, Aluminium und Zink-Metall als Pulver, Späne oder Granalien, vorzugsweise in feinstverteilter Form, wie bspw. Aluminium "Pyro"Schliff, kann ein weiteres Redoxsystem eingeführt werden, welches gemäß folgender Gleichungen ein wesentlich größeres Redox-Potential als das beschriebene Fe(II) / Fe(III) - Redoxsystem aufweist.

Al3+ + 3 e- ⇄ Al Eo = - 1,66 eV

Fe3+ + 3 e- ⇄ Fe Eo = - 0,04 eV

FeII (FeIII)2 O4 + 8H+ + 8e- = 3 Fe + 4 H2O Eo = 0,085 eV

Zn (2+) + 2e- ⇄ ZnEo = - 0,7618 eV

Zusätzlich dient der im alkalischen Milieu entstehende Wasserstoff in diesem Fall dazu, die Porosität und die innere Oberfläche der erfindungsgemäßen Zusammensetzung nochmals zu steigern. Im Falle, dass die erfindungsgemäße Zusammensetzung zu Formkörpern / Granulat weiterverarbeitet wird, dient dieser Prozess unter anderem dazu, vorzugsweise in Verbindung mit konventionellen chemischen Schäummitteln, die Dichte der Formkörper selektiv einzustellen.

Darüber hinaus stellt sich völlig unerwartet heraus, dass sich durch thermisches Aktivieren der erfindungsgemäßen Zusammensetzung die spezifische Oberfläche und insbesondere die Adsorptionsfähigkeit für die zu immobilisierenden Substanzen drastisch erhöhen lässt.

Durch die thermische Aktivierung werden sowohl die Goethit, Lepidokrokit und Boehmit-Phasen in der erfindungsgemäßen Zusammensetzung als auch die anteilsmäßig prozentual nahezu beliebig einzustellende Siderit-Phase partiell bis vollständig zersetzt. Auf diese Weise entsteht eine extrem hohe innere Oberfläche (nach BET) einerseits durch Abspaltung von Wasser (ab 250 bis 300°C aus den verschiedenen Eisenhydroxid(oxidhydrat)-Phasen und verbliebenen Aluminiumhydroxid/ oxidhydrat-Phasen), andererseits wird Kohlendioxid ab 450°C aus der Siderit-Phase abgespalten, was die innere Oberfläche nochmals erhöht. Die innere Oberfläche (nach BET) der bei einer Temperatur von bis zu 550 °C getemperten erfindungsgemäßen Zusammensetzung, kann einen Wert von >200 m2/g erreichen. Dies erklärt die enorm gesteigerte Effektivität der so behandelten erfindungsgemäßen Zusammensetzung in ihren verschiedenen Ausformungen als Adsorptionsmittel. Parallel steigt dadurch die Porosität.

In der Abwasserbehandlung / Trinkwasseraufbereitung spielt weltweit der Nitratgehalt eine entscheidende Rolle, da im Grund- und Oberflächenwasser die Grenzkonzentration von < 50 mg/Liter in hohem Maße überschritten wird (NRW: 200 bis 400 mg/L je nach Region, Kalifornien / USA : 800 mg/L in 2015). Die Ursachen sind einerseits der Eintrag von Gülle oder Nitrat-Kunstdünger, andererseits im Boden ablaufende Prozesse (Nitrifikation; aerob und anaerob). Laut Literatur kommt der Löwenanteil durch den Nitrat-Eintrag als Gülle oder als mineralischer /chemischer Kunstdünger zustande. Die im Boden ablaufenden Prozesse tragen laut dem momentanen wissenschaftlichen Stand der Bio-/Geochemie maximal nur etwa 5% zur Überdüngung durch Nitrat bei.

Fe(II) reduziert nun Nitrat zu Nitrit, das dann mittels des in den erfindungsgemäßen Granulaten z. B. inkorporiertem Harnstoff und/oder Aminosulfonsäure zu Stickstoff reduziert wird und als Gas entweicht. Dieser Prozess kann auch in zwei Phasen ablaufen:
1. Schritt: Reduktion von Nitrat zu Nitrit
2. Schritt: Zerstörung von Nitrit durch Reaktion mit z. B. Harnstoff oder Amidosulfonsäure mit anschließendem Entweichen des gebildeten Stickstoffs.

Somit ist neben dem Phosphat-Problem das die Wasserwirtschaft nahezu weltweit (siehe UN-Biospärenbericht 2014) umtreibende Nitrat-Problem im Grundwasser /Oberflächenwasser einer nachhaltigen Lösung nahe gekommen. Hier ist sehr wichtig, dass bei der Trinkwasseraufbereitung keinesfalls Chrom(VI) freigesetzt wird, weder im Trinkwasser noch in Oberflächengewässern.

Wenn im Bereich der Adsorption die Adsorptionskraft der erfindungsgemäßen Zusammensetzung (im Folgenden auch als "iRS" bezeichnet) nachlässt, können z.B. entweder durch saure oder basische Elution der jeweilige Schadstoff zur industriellen Verwertung ("secondary mining") nunmehr als Wertstoff zurück gewonnen werden. Alternativ können im iRS adsorbierte Schadstoffe auch in Geopolymere überführt, d.h. dauerhaft immobilisiert und somit endlagerfähig gemacht werden.

Die mit dem erfindungsgemäßen iRS hergestellten Geopolymere zeichnen sich durch höchste Beständigkeit gegen saure/basische Medien, die bei der Endlagerung in nassen Bergwerken/Endlagerstätten auftreten können, aus und sind gegen die ungewollte Mobilisierung der adsorbierten Schadstoffe aus den jeweiligen Geopolymer-Formkörpern resistent. Solange das Redoxsystem vorhanden und aktiv ist, kann auch durch saure/basische oxidative Angriffe kein eingelagerter/adsorbierter Schadstoff mobilisiert werden.

Dadurch, dass durch die erfindungsgemäße Herstellung der Geopolymere eine optimale Distribution und Dispergierung der verbrauchten/Schadstoff beladenen erfindungsgemäßen Zusammensetzung im jeweiligen Geopolymer garantiert ist, und weiterhin, durch z.B. eine nachträgliche Oberflächenmodifizierung der verbrauchten erfindungsgemäßen Zusammensetzung auf Basis hydrophober Polymersysteme, das Eindringen von Lösungsmitteln oder Wasser minimiert wird, sind die in jeder geometrischen Form darstellbaren Formkörper dauerhaft hydrophob eingestellt und somit sicher lagerbar. Dies gilt auch für die Endlagerung unter fragwürdigen Bedingungen (bspw. ein nasses Kohlebergwerk mit viel Schwefel, welcher zu SO2 oxidiert wird und letztendlich Schwefelsäure ergibt, die den pH auf bis zu 1 senken kann).

Zusätzlich lässt sich die erfindungsgemäße Zusammensetzung nicht nur zur Reinigung von flüssigen Phasen, sondern auch zur Gas-/Luft-Reinigung einsetzen. Als Beispiel dient die Biogas-Reinigung von H2S und die Abluftreinigung von Massentierzucht-Anlagen von z.B. Ammoniak und H2S. Auch zur Reinigung von Zuluft in Gebäuden ist die erfindungsgemäße Zusammensetzung einsetzbar. Hierbei werden unerwünschte Schadstoffe herausgefiltert. Die Bandbreite reicht von Feinstaub/Feinststaub bis zu organischen Verunreinigungen, von PAK über Gerüche bis zu Metaboliten und Pathogenen.

Zusätzlich kann durch den Einsatz einer Flüssigkeit die hydrophile Attraktion der herauszufilternden Substanz benutzt werden, um die Effizienz einer Filterkartusche basierend auf der erfindungsgemäßen Zusammensetzung zu erhöhen. Hierbei kann durch Benetzen (Befeuchtung) des erfindungsgemäßen Zusammensetzung-Bettes, z. B. in einer Filterpatrone mit Flüssigkeiten, die Adsorptionseffektivität noch weiter erhöht werden, sowie im Falle , dass die Flüssigkeit Wasser ist, die optimale Luftfeuchtigkeit von 50 bis 60% RH eingestellt werden.

Zusätzlich kann durch die Beaufschlagung mit Wasser generell die Adsorptionsfähigkeit der erfindungsgemäßen Zusammensetzung in dieser erfindungsgemäßen Anwendung stark gesteigert und so die erforderliche Menge der einzusetzenden erfindungsgemäßen Zusammensetzung herabgesetzt werden oder die Lebensdauer einer erfindungsgemäßen Filterkartusche verlängert werden.

Die Reinigung heißer Gase wird durch den kombinierten Einsatz von erfindungsgemäßer Zusammensetzung (benetzt oder imprägniert) mit Flüssigkeiten sehr erleichtert, da die Kühlung des Adsorber-Bettes die Adsorption physikalisch befördert. Die für flüssige und gasförmige Systeme beschriebene Entfernung von Schadstoffen durch Adsorption kann gleichermaßen in der Adsorption von Schadstoffen in festen Systemen wie Böden in der Agro-Technologie (Bodenverbesserungsmittel) Anwendung finden. Durch die Feuchte in Böden bewegen sich Schadstoffe wie in Flüssigkeiten. Im Kontakt mit z. B. granulierter erfindungsgemäßen Zusammensetzung werden Schadstoffe wie in gasförmigen und wässrigen Systemen adsorbiert/gefällt/immobilisiert. Dieser Prozess ist langfristig. Insofern wirken hier insbesondere iterative Adsorber als gute Bodenverbesserungsmittel.

Dieser neuartige, erfindungsgemäße iRS eröffnet die Möglichkeit, kostengünstig ein Adsorptionsmittel in/für nahezu allen Anwendungen zu "designen" /generieren, sowie ein für zusätzliche Anwendungen wie Bohrbeschwerungshilfsmittel, Feuerlöschmittel für Flächen-/Offenbrände sowie Waste-Management und Bodenverbesserungsmittel optimal geeignetes Material erstmalig verfügbar zu machen. Dass die erfindungsgemäße Zusammensetzung kein Chrom(VI) enthalten kann, ist dabei von entscheidender Bedeutung. Die Bandbreite geht von Nitratentfernung aus Trinkwasser-Rohstoffquellen über Phosphatanreicherung/ Phosphatrückgewinnung für Düngerzwecke bis zur Entfernung von vielfältigsten Schadstoffen, wie z.B. Schwermetall(ion)en aus Abwässern. Auch für die Gas- /(Ab)-Luft-Filterung ergeben sich, insbesondere in Kombination mit Flüssigkeiten - z. B. Wasser, neue technische Anwendungen, die so bisher nicht darstellbar waren. Auch im Agro-Bereich sind große Anwendungsgebiete vorhanden.

Darüber hinaus ergibt sich die Möglichkeit, die durch adsorbierte Schadstoffe belastete erfindungsgemäße Zusammensetzung in Form von Geopolymer zu einem speziell für Untertage-Bau/ Bergwerksverfüllung prädestinierten Füllmaterial zu konvertieren. Damit eröffnen sich breite Möglichkeiten zum Waste-Management. So ergibt sich z.B. die Möglichkeit, durch Einschüttung entsprechender erfindungsgemäßer Zusammensetzung in Granulatform in aufgelassene und ohne Wassermanagement" abgesoffene" Kohlegruben mit hoher Schadstoffbelastung, die kurz bis mittelfristig die anstehenden Grundwasser-Horizonte gefährden (z. B. speziell im Ruhrgebiet), einzufüllen und so die Schadstoffe durch permanente Adsorption in der erfindungsgemäßen Zusammensetzung zu immobilisieren. Hierbei laufen Schadstoffadsorption, Immobilisierung und Endlagerung parallel ab.

Weitere, von der erfindungsgemäßen Zusammensetzung abgedeckten Anwendungsfelder sind Bohrbeschwerung und Feuerlöschmittel. Hier besteht der Nutzen darin, dass in diesen beiden durch überwiegenden Verbleib der Endprodukte in der Litho- bzw. Biosphäre nicht nur keine negativen Effekte wie bei den herkömmlich verwendeten Materialien zu verzeichnen sind, sondern sich, wie oben dargestellt, außerordentlich positive Effekte ergeben und keinerlei Schadstoffe in die Umwelt eingetragen werden. Damit sollte der Kontamination der Litho- und Biosphäre, anders als bei den zur Zeit konventionell /kommerziell eingesetzten Materialien, die bromorganische Verbindungen und/oder Antimontrioxid beinhalten, ein Ende gesetzt sein. Für den Einsatz der erfindungsgemäßen Zusammensetzung in der Praxis spielt die Darreichungsform als Formkörper, insbesondere als Granulat, eine bedeutende Rolle, denn so steht dem Anwender ein gut handhabbares Produkt zur Verfügung.

Granulierverfahren im Schnell-/Turbinenmischer
Das zur Verwendung gekommene Gerät ist ein Turbinen-/ Schnell-Mischer (Thyssen-Henschel) mit 75 L Volumen und einer drehzahlgeregelten (Thyristor-gesteuerten) Gleichstrommaschine.
Beim Mischvorgang heizt sich die jeweilige Charge bei höchster
Umdrehungsgeschwindigkeit (im Equilibrium) innerhalb von 4,5 Minuten auf 100°C auf. Zur Granulierung wird die Granulierformulierung (s.w.v.) in einer Gesamtmenge von 20 kg pulverförmig in den Mischer gegeben.
Der Mischer wird mit 500 RpM gestartet und 1 Minute laufen gelassen. Dann wird in dünnem Strahl bei 2500 RpM während 45 Sekunden die jeweilige Menge an Säurelösung zugegeben. Der Prozess wird durch Inaugenscheinnahme (Sichtöffnung) und die Leistungsaufnahme gesteuert. Wenn sich die Granalien auf die gewünschte Größe von 2-3 mm gebildet haben, wird bei voller Drehzahl ausgetragen und im angeflanschten Kühlmischer (KM) bei langsamster Drehzahl auf RT abgekühlt. Anschließend wird auf dem entsprechenden Siebsatz die Granalien der gewünschten Größe separiert.

Granulierverfahren mit Pelletierteller
a) Auf dem 900 mm-Pelletierteller hergestellte Granulate von 2 bis 3 mm Durchmesser, sowie Mikrogranulat mit der mittleren Korngröße von 0,25 mm, enthalten die erfindungsgemäße Zusammensetzung und einen entsprechenden Anteil von Binder/Bindern (beispielsweise CaO, Anhydrit, MgO oder Mischungen hiervon) in einem Prozentgehalt, die einerseits maximalen Gehalt der erfindungsgemäßen Zusammensetzung ermöglicht, andererseits eine Druckfestigkeit (20N) des Granulats ergibt, die die "Wurfweite-Ost für Dünger(36 m)" erfüllt.
b) Beispielsweise wird die erfindungsgemäße Zusammensetzung mit 10 Gew% eines kaustischen hochreinen MgO versetzt und in üblicher Weise auf dem Pelletierteller zu Granulat von einem mittleren Durchmesser von 2 bis 3 mm verarbeitet, wie es in allen nachfolgenden Versuchen verwendet wurde.
c) Die erfindungsgemäße Zusammensetzung ist mit dem Redoxsystem ausgerüstet, beispielsweise einer Eisen (II) verbindung, welche mit dem Goethit aus der erfindungsgemäßen Zusammensetzung das Redoxsystem Fe(II) / Fe(III) ergibt.

Die resultierenden Formkörper/(Mikro)Granulate haben eine Druckfestigkeit von bis zu 50 N.

Einzelne Beispiele für Granulierungen mit unterschiedlichen Bindern und Zusätzen:
Die Aufgabemenge betrug, wenn nicht anders angegeben, 5 kg erfindungsgemäße Zusammensetzung, auf einer analogen Waage abgemessen. Die Neigung und die UpM des Granuliertellers wurden generell so eingestellt, dass die Trombe optimal "fällt" und die maximale Kornverdichtung ergibt. Der Granulierteller-Anstellwinkel war, wenn nicht anders angegeben, 50°.
G 1): 4 kg der erfindungsgemäßen Zusammensetzung wurden vorgelegt und bei niedrigster Umlaufgeschwindigkeit mit 300 mL Natriumwasserglas-Lösung (Dichte: 1,37) besprüht (aus Druckpumpensprüher 1000 mL) bis ein Mikrogranulat resultierte. Darauf wurden insgesamt 1000 mL Wasser aufgesprüht, bis ein 3 mm-Granulat entstand.
G 2): Eine Schnellmischer-Vormischung aus 5 kg erfindungsgemäßer Zusammensetzung und 8% (400g) Anhydrit (Radiplus C 17 A) wurden vorgelegt. Und schnellstmöglich mit 1370 mL Wasser besprüht. Nach 5 min resultierte ein Feingranulat. Nach 10 min waren größere Granalien entstanden. Die Umdrehungsgeschwindigkeit des Granuliertellers wurde auf ca. 15 UpM erhöht, und innerhalb von 15 min wurden insgesamt noch 300 mL Wasser dazugegeben. Nun entstanden Granulate von ca. 3 mm Durchmesser.
G 3): Eine Vormischung aus 5 kg der erfindungsgemäßen Zusammensetzung, 500 g MgO (purissimum) und 8% Amidosulfonsäure (purum) wurde vorgelegt und bei einer Drehtellerneigung von 52° langsam (innerhalb von 20 min) mit insgesamt 800 ml Kaliwasserglas-Lösung ("baufan", von OBI) besprüht. Es entstanden sehr feste Granalien. Dann wurden noch 80 mL Wasser aufgesprüht. Das Trombenvolumen war sehr stark reduziert. Anschließend wurden bis zum Zeitpunkt 35 min noch 100 mL und bis zum Zeitpunkt 50 min 300 mL Wasser zugegeben. Es bildeten sich recht gleichmäßige Granulate von 2 bis 3 mm Korngröße.
G 4): Eine Schnellmischer-Vormischung aus 5 kg der erfindungsgemäßen Zusammensetzung, 15% Harnstoff (purissimum) und 5% CaO (purum) wurde innerhalb von 3 min mit Zusprühen von 1000 ml Wasser zu 2 mm-Granalien verarbeitet. Dann wurde die Umlaufgeschwindigkeit zur Trombenoptimierung um 2 UpM erhöht. Innerhalb von 8 min wurden 2000 ml Wasser zugesprüht, und die Granaliengröße blieb bei maximal 1,5 mm. Bis 12 min Laufzeit wurden noch 600 ml addiert. Nachdem schön gleichmäßige Granalien von 2,5 bis 3 mm resultierten, wurde nach 25 min die Charge abgelassen.
G 5): 5 kg der erfindungsgemäßen Zusammensetzung wurden innerhalb von 3 min mit 1200 ml Kaliwasserglas (s.w.v.) besprüht, und es bildeten sich rasch 2,5 bis 3 mm große Granalien. Innerhalb von 10 min wurden 200 ml Wasser aufgesprüht, und es bildeten sich weiche Granulate, die weiter agitiert wurden. Als die ca. 3,5 mm großen Granulate fester wurden, wurde die Charge ausgetragen.
G 6): 5 kg der erfindungsgemäßen Zusammensetzung mit 1% (50 g) CaO (s.w.v.) aus Vormischung wurden vorgelegt und schnellstmöglich innerhalb von 2 min mit 1300 ml Kaliwasserglas besprüht. Nach 10 Minuten war Granulat von 3 mm Korngröße entstanden.
G 7): 4 kg einer Vormischung aus erfindungsgemäßer Zusammensetzung und 2% (100g) Fe-Pulver (feinst) wurden vorgelegt und sehr schnell mit 1400 ml Wasser besprüht. Nach 10 Minuten wird die restliche Vormischung (1 kg insgesamt) dazugegeben. Nach 1 h wurde der Ansatz gepoolt, der sich eher mühsam zu Granalien von ca. 3 mm geformt hatte. Gesamtdauer: 60 Minuten
G 8): Eine Vormischung aus 5 kg der erfindungsgemäßen Zusammensetzung , 500 g MgO (purissimum) und 2% Aluminium-"Pyroschliff" (mit Laurinsäure werksmäßig "gepickelt") wurde vorgelegt und innerhalb von 3 min mit 1500 ml Wasser besprüht. Es entstanden sehr gute kleine Granalien. Anschließend wurde die Trombe mit ca. 100 ml 5%ige Zitronensäurelösung (in Wasser) besprüht. Es resultieren sehr schöne, gleichmäßig verteilte 2 bis 3 mm Granalien mit sehr enger KV. Gesamtdauer: 25 Minuten
G 9): Eine Vormischung aus 5 kg der erfindungsgemäßen Zusammensetzung, 2% (100g) CaO (s.w.v.) und 2% Zn(purissimum, mittlere Korngröße ca. 10 bis 20 Mikometer) wurde mit einer 8%igen Lösung , hergestellt aus Eisessig (purissimum) und Wasser, innnerhalb von 5 min besprüht. Die Prä-Granalien wurden warm. Nach 6 min wurden 2 Schippen der erfindungsgemäßen Zusammensetzung und nach 8 min nochmals 2 Schippen der erfindungsgemäßen Zusammensetzung aufgepudert, um die feuchten sehr schönen Granalien von ca. 2 mm am Zusammenbacken zu hindern. Am Ende resultierten quasi-trockene Granulate von 3 mm Durchmesser. Gesamtdauer: 10 Minuten
G 10): Auf die Einsatzbedingungen in Kohlebergwerken maßgeschneidert, widerstehen die Granulate den korrosiven Bedingungen bis zu einem pH-Wert bis zwei herunter. Die Granulate werden aus der erfindungsgemäßen Zusammensetzung hergestellt und haben einen Durchmesser von 30 bis 0,1 mm, vorzugsweise von 10 bis 1 mm und insbesondere 5 bis 2 mm. Beide Granulierverfahren können Anwendung finden, bzw. wurden benutzt. Erfindungsgemäß nimmt das Granulat alle anorganischen, Trinkwasser gefährdenden und organischen Schadstoffe hauptsächlich aus (versickertem) Hydraulik-Öl herührenden PAKs, auf und immobilisiert sie durch chemische Reaktion/Adsorption. Zur leichteren Einbringung in die abgeteuften Bereiche wird zielgemäß die Dichte des (Schaum-)Granulates so eingestellt, dass diese nahe 1 g/cm3 ist. Hierdurch wird bei der Einbringung als Slurry die Fließfähigkeit desselben befördert und Absetzungen des Granulates als dem eigentlichen Wirkstoff, der möglichst bis in die hintersten Winkel des Bergwerks verbracht werden muss, verringert bzw. verhindert.

Da die Adsorption/chemische Bindungsbildung unter den nassen Bedingungen im Bergwerk irreversibel ist und das erfindungsgemäße Granulat durch die Formulierung(en) weitestgehend beständig gegen Umwelteinflüsse ist, wird das Granulat auf ewig im aufgelassenen Bergwerk belassen, da die Bedingungen der sicheren Endlagerung gewährleistet sind.

### Weiterverarbeitung

### Trocknung

Die entstandenen Granulate wurden jeweils 1 Stunde bei 110°C im Vakuumtrockenschrank getrocknet. Die Raumdichte (UTBD= Untamped Bulk Density) ist 1800 g/ l. Die TBD (Tamped Bulk Density) liegt bei 1900 g/ l. Die Eluat-Analyse zeigt, dass alle Schad-Ionen an der Nachweisgrenze bei < 1 ppb liegen. Dies trifft zu für Ni, Cd,Pb, As, Hg, V, U, Th, Zn, Sn, etc. und die entsprechenden Schad-Anionen wie Nitrat, Sulfat, Phosphat, etc.). Somit sind beide Granulatsysteme Chrom(VI)-frei und unterschreiten die Grenzwerte der Trinkwasserverordnung in ihrer Neufassung von 2012, respektive liegen an der Nachweisgrenze der jeweiligen Schadstoffe. Ebenso wird die Düngerverordnung erfüllt, welche niedrigere Grenzwerte als die Trinkwasserverordnung aufweist, da man hier wegen möglicher Anreicherung von Schadstoffen in verschiedensten Pflanzen (Salat Buchweizen reichern Cadmium und Pilze Strontium und Caesium 137 an) Sicherheit haben will.

### Thermische Aktivierung

Als Bezugsgrößen wurde die Adsorption der erfindungsgemäßen Zusammensetzung, bzw. des Ausgangsproduktes Rotschlamm, gewaschen thermisch aktiviert, bzw. sauer aktiviert genommen. Diese Werte ergaben zwei Basislinien ("0-Linien"), die die Verbesserung der erfindungsgemäßen Zusammensetzung in allen relevanten Aspekten gegenüber ursprünglichem, unbehandeltem Rotschlamm und konventionell aktiviertem Rotschlamm verdeutlichten. Dazu wurde in Relation gesetzt, was die Temperung der erfindungsgemäßen Zusammensetzung, wie auch die der daraus hergestellten Granulate/Formkörper an gesteigerter BET/Porosität an Adsorptionseffektivität ergeben.

Versuchsbeschreibung der thermischen Aktivierung der erfindungsgemäßen Zusammensetzung / Granulat: Die erfindungsgemäße Zusammensetzung wird entweder als Pulver oder in Gestalt von Formkörpern (z. B. Granulat) in neutraler Atmosphäre/Schutzgas in einem Muffelofen mit entsprechender Schutzgaszuführung aufgeheizt. Die Verweildauer und die Temperaturführung des beschriebenen Ofens richten sich nach dem erwünschten Aktivierungsgrad. Das erfindungsgemäße Granulat, wie hier beschrieben, hatte bei den in G 9) genannten Parametern die beste Aktivierung gezeigt (Adsorptionsversuche).

### Oberflächenmodifizierung zur Hydrophobierung / Versiegelung von schadstoffbelasteten, end zulagernden Granalien

Das Material, das oberflächenmodifiziert werden soll, wird in einer die Oberflächen modifizierende(n) Substanz(en)lösende flüssige Phase bspw. im Verhältnis 10 zu 1 gegeben und eine Zeit lang gerührt. Wenn die Oberflächenbeschichtung auf die Oberfläche der (Primär)Partikel aufgezogen ist, wird dekantiert, und das Lösungsmittel verdampft. Es ist auch möglich, Granulate/Primärpartikel mittels eines Turbinen-/Schnellmischers präzise Oberflächen zu beschichten. Das zu behandelnde Material wird in den Mischer gegeben, zusammen mit dem Beschichtungsmittel. Bei reaktiven Beschichtungsmitteln (Organosilane, Aluminate, Me-organische Verbindungen wie Zirkonaluminate/Titanate; etc.) wird solange agitiert, bis das entstehende Reaktionsprodukt (z.B. flüchtige organische Verbindungen wie Alkoholate, 2-Methoxyethanol oder Wasser) abgedampft ist. Es ist ebenso möglich, semi-permeable Membranen aus geeigneten Polymeren aufzubringen, wenn eine verzögerte Freisetzung benötigter adsorbierter Inhaltsstoffe (bspw. PKN-Dünger, Spurenelemente, systemische Pflanzenschutzmittel, etc.) gewünscht ist. Hierbei wird die Freisetzungsgeschwindigkeit unter Berücksichtigung der jeweiligen Pflanzen- und Bodenchemie dadurch gesteuert, dass die Membrandicke/Löslichkeit des Membranpolymersystems variiert wird. Hydrophobierungsmittel, Verkapselungsmittel, Oberflächenmodifizierung, Oberflächenversiegelung werden typischerweise im Bereich von 0,1 Gew.% bis zu 10 Gew.% an Reaktionsagenz (s.w.v.), bezogen auf das Gesamtgewicht der zu behandelnden Granulate, vorzugsweise von 0,5 bis 5%Gew.% und insbesondere 1 Gew.% aufgebracht.

### Anwendungsbeispiele

### Nitratentfernung aus wässrigen Systemen

Zuerst wird das frisch eingefüllte Granulatbett mit einem Säulenvolumen VE-Wasser equilibriert. Anschließend wird die Nitrat-Lösung mit 0,1L /min. durch die Säule gepumpt. Aus dem überlaufenden Eluat am Kopf der Säule wird in Abständen von 10 Minuten eine Probe gezogen und mittels AAS auf Nitrat untersucht. Auch nach 200 Minuten ist kein Nitrat im Eluat festzustellen.

Zur Nitratentfernung aus wässriger Lösung wurden in einem zweiten Versuch erfindungsgemäße Formkörper, welche 10 Gew.% Amidosulfonsäure (p.a.) enthielten, verwendet. Der Versuchsaufbau entspricht dem obigen mit der Abweichung, dass die Nitratkonzentration nun 800 mg/l (Grundwasser- Nitratwert in Californien,USA) und die Menge der Nitratlösung 1000 l betrug. Auch hier wurde in den gezogenen Proben zu keiner Zeit Nitrat gefunden, d.h. im Umkehrschluss, dass alles Nitrat abgebaut wurde. Die Kontrolle auf Sulfat-Ionen ergab auch keinen positiven Befund.

### Reinigung von gasförmigen Substanzen

Durch ein Granulatbett von 100 mm Durchmesser und 1000 mm Länge in einem senkrechten Glasrohr strömt die Luft, die vorher durch eine Gülle (Schweinegülle aus Mastbetrieb) mittels Feindüse "geblubbert" wird. Beim olfaktorischen Test der "Luft" ist eine schwere Geruchsbelastung festzustellen. Wenn diese Test-"Luft" mit 50 l /Minute durch das Granulatbett der erfindungsgemäßen Zusammensetzung gezogen wird, ist am Ende der Teststrecke (nach der Säule) olfaktorisch keine Geruchsbelästigung mehr festzustellen.

Ammoniak wird aus einer Bombe entnommen und mittels Druckminderer und Luft-Bypass-Ventil ein Luft-Gas-Gemisch mit 200 ppm NH3 im Gesamtgasstrom erzeugt. Der Durchflussmesser zeigt einen Durchfluss von 50 l /Minute an. Die aus dem Filterrohr (Dimensionen wie zuvor beschrieben) austretende Abluft wird olfaktorisch auf stechenden Ammoniakgeruch getestet. Die Erkennungsgrenze /Wahrnehmungsgrenze des Menschen beginnt bei 0,03 bis 0,05 ppm Ammoniak. Der Grenzwert liegt bei 20 ppm. Um die Adsorptionsleistung zu erhöhen, kann das System mit Wasser beaufschlagt werden.

Für die Entfernung von Feinstaub/Feinststaub wurden Filterpatronen/Kartuschen wie bei der Luftreinigung eingesetzt (1000 mm lang und 100 mm Innendurchmesser). Das Gesamtsystem wurde mit 12 000 L/h betrieben.
Das Testsystem für die Luftwäsche mit Fein(st)staubbelastung von 10 mg/m³ umfasste die Bereitstellung eines Testmediums, wobei durch permanente Luftverwirbelung, kontrolliert durch Lufttrübung (Extinktion) mittels Laser, dafür gesorgt wurde, dass der Staub während des Tests über den gesamten Volumenstrom konstant in der Testluft verteilt blieb. Interessanterweise wurde ermittelt, dass die mittels Wassereinspritzung (durch vier seitlich angeordnete Düsen mittels jeweils Schlauchpumpen) nass gehaltene Kartuschenpackung eine ca. zwanzigfache Filterwirkung aufweist.

### Geopolymere

Die Darstellung von Geopolymeren aus Kali-Wasserglas erfolgt so, dass das Alkali/Siliziumverhältnis von 1 - 4 variiert wird. Das nachstehend beschriebene Kali-Wasserglas gebundene Geopolymer arbeitet vorzugsweise mit dem K/Si-Verhältnis 1 zu 2, wobei in diesem Beispiel als Si-liefernde Komponente Flugasche oder Tailings eingesetzt werden. Das Material wird in Form seiner Einzelkomponenten zusammen mit der durch Adsorption beladenen erfindungsgemäßen Zusammensetzung in einen Schnellmischer gegeben und bei höchster Drehzahl solange agitiert, bis die durch die Friktion eintretende Erwärmung des Mischgutes 100° C erreicht. Es reichen auch 80° C aus, um die Polymerisationsreaktion zu beschleunigen. Anschließend wird die Geopolymerrohmasse ausgetragen und in entsprechenden Formen zur Herstellung der Normprüfkörper so verdichtet, dass möglichst keine Lunker entstehen. Das Schrumpfen der Formkörper ist hier minimiert, so dass keine Risse im zur Endlagerung gelangenden Formkörper auftreten und so die Integrität der Formkörper erhalten bleibt. Untersuchungen vom Eluat des Geopolymers (Bruchgranulat) zeigen, dass aus dem Geopolymer keine Schadstoffe in die wässrige Phase gehen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Zusammensetzung, enthaltend modifizierten, chromatarmen Rotschlamm mit einer mineralischen Zusammensetzung von
- 10 bis 50 Gewichtsprozent Eisenverbindungen,
- 12 bis 35 Gewichtsprozent Aluminiumverbindungen,
- 5 bis 17 Gewichtsprozent Siliziumverbindungen,
- 2 bis 10 Gewichtsprozent Titandioxid,
- 0,5 bis 6 Gewichtsprozent Calciumverbindungen,
- 0 bis 1 ppm an Chrom(VI)-Verbindungen und
- gegebenenfalls weitere unvermeidbare Verunreinigungen,
wobei die Zusammensetzung, insbesondere der modifizierte, chromatarme Rotschlamm, ein schwerlösliches Reduktionsmittel für Cr(VI) enthält, wobei das schwerlösliche Reduktionsmittel für Cr(VI) eine Löslichkeit in Wasser bei pH 7 und 25°C von weniger als 1 g/l aufweist,
wobei die Zusammensetzung ferner ein pH-Puffersystem umfasst, das zum Stabilisieren eines pH-Bereichs, in dem das schwerlösliche Reduktionsmittel für Cr(VI) und das daraus entstandene Cr(III) eine Löslichkeit in Wasser bei 25°C von weniger als 1 g/l aufweist, konfiguriert ist.

2. Zusammensetzung nach Anspruch 1, wobei das schwerlösliche Reduktionsmittel für Cr(VI) eine Löslichkeit in Wasser bei pH 7 und 25°C von weniger als 0,1 g/l aufweist.

3. Zusammensetzung nach Anspruch 1 oder 2, wobei das schwerlösliche Reduktionsmittel für Cr(VI) eine schwerlösliche Fe(II)-Verbindung umfasst.

4. Zusammensetzung nach einem der vorherigen Ansprüche, wobei das schwerlösliche Reduktionsmittel für Cr(VI) Eisen(II)carbonat (FeCO₃) umfasst.

5. Zusammensetzung nach einem der vorherigen Ansprüche, wobei darin eine Kombination aus leichtlöslichen und schwerlöslichen Fe(II)-Verbindungen enthalten ist, wobei die leichtlösliche Fe(II)-Verbindung eine Löslichkeit in Wasser bei pH 7 und 25°C von mehr als 1 g/l aufweist und die schwerlösliche Fe(II)-Verbindung eine Löslichkeit in Wasser bei pH 7 und 25°C von weniger als 1 g/l aufweist.

6. Zusammensetzung nach einem der vorherigen Ansprüche, wobei der modifizierte, chromatarme Rotschlamm einen modifizierten, chromatarmen, karbonisierten Rotschlamm umfasst, bei dem das Gewichtsverhältnis von Fe(II)carbonat zu den Oxiden des Eisens mindestens 1 ist.

7. Zusammensetzung nach einem der vorherigen Ansprüche, wobei der modifizierte, chromatarme Rotschlamm einen modifizierten, chromatarmen, karbonisierten und rehydratisierten Rotschlamm umfasst, bei dem das Gewichtsverhältnis von Fe(II)carbonat zu den Oxiden des Eisens mindestens 1 ist und das Gewichtsverhältnis der Summe von Eisenhydroxid und Eisenoxidhydrat zu den Oxiden des Eisens mindestens 1 ist.

8. Zusammensetzung nach einem der vorherigen Ansprüche, wobei der modifizierte, chromatarme Rotschlamm eine spezifische Oberfläche im Bereich von 2 bis 250 m²/g (gemessen nach BET) aufweist.

9. Zusammensetzung nach einem der vorherigen Ansprüche, wobei der modifizierte, chromatarme Rotschlamm eine spezifische Oberfläche im Bereich von 10 bis 200 m²/g (gemessen nach BET) aufweist.

10. Zusammensetzung nach einem der vorherigen Ansprüche, wobei der modifizierte, chromatarme Rotschlamm ein spezifisches Gewicht von mindestens 4,5 g/cm³, insbesondere von mindestens 5 g/cm³, insbesondere von mindestens 5,3 g/cm³, aufweist.

11. Zusammensetzung nach einem der vorherigen Ansprüche, wobei die Zusammensetzung, insbesondere der modifizierte, chromatarme Rotschlamm, in der Form eines Granulats vorliegt.

12. Zusammensetzung nach einem der vorherigen Ansprüche, wobei die Zusammensetzung, insbesondere der modifizierte, chromatarme Rotschlamm, zumindest teilweise eine Oberflächenmodifizierung aufweist, insbesondere zumindest teilweise mit einer Oberflächenbeschichtung versehen ist.

13. Zusammensetzung nach einem der vorherigen Ansprüche, wobei die Zusammensetzung ferner ein weiteres Reduktionsmittel für Cr(VI) enthält, das insbesondere aus der Gruppe, bestehend aus Fe, Al und Zn, ausgewählt ist.

14. Zusammensetzung nach einem der vorherigen Ansprüche, wobei die Zusammensetzung ferner ein Mittel zum Entfernen von Nitrat und Nitrit enthält, das insbesondere aus der Gruppe, bestehend aus Harnstoff und/oder Amidosulfonsäure, ausgewählt ist.

15. Zusammensetzung nach einem der vorherigen Ansprüche, wobei die Zusammensetzung ferner ein Mittel enthält, das zum Entfernen von Schadstoffen, insbesondere von Schwermetallen, mittels Bildung schwerlöslicher Salze konfiguriert ist, und insbesondere ein Sulfid umfasst.

16. Zusammensetzung nach einem der vorherigen Ansprüche, wobei die Zusammensetzung ferner ein Mittel enthält, insbesondere eine organische Substanz, die zur Bildung von Aktivkohle auf der Oberfläche bei thermischer Behandlung konfiguriert ist.

17. Verfahren zur Herstellung einer Zusammensetzung gemäß einem der Ansprüche 1 bis 16, wobei das Verfahren die folgenden Schritte umfasst:
a) Bereitstellen von neutralisiertem Rotschlamm,
b) Zugeben eines schwerlöslichen Reduktionsmittels für Cr(VI) zu dem Rotschlamm und Vermischen des schwerlöslichen Reduktionsmittels für Cr(VI) mit dem Rotschlamm, wobei das schwerlösliche Reduktionsmittel für Cr(VI) eine Löslichkeit in Wasser bei pH 7 und 25°C von weniger als 1 g/l aufweist,
c) Reduzieren von in dem Rotschlamm enthaltenen Chrom(VI)-Verbindungen mittels des schwerlöslichen Reduktionsmittels für Cr(VI) zu Chrom(III)-Verbindungen in wässrigen Systemen unter Erhalt eines modifizierten, chromatarmen Rotschlamms,
wobei das Verfahren ferner ein Zugeben eines pH-Puffersystem umfasst, das zum Stabilisieren eines pH-Bereichs, in dem das schwerlösliche Reduktionsmittel für Cr(VI) und das daraus entstandene Cr(III) eine Löslichkeit in Wasser bei 25°C von weniger als 1 g/l aufweist, konfiguriert ist.

18. Verfahren nach Anspruch 17, wobei in Schritt b) eine schwerlösliche Fe(II)-Verbindung, insbesondere Fe(II)-Carbonat, als Reduktionsmittel für Cr(VI) zugegeben wird, wobei die schwerlösliche Fe(II)-Verbindung eine Löslichkeit in Wasser bei pH 7 und 25°C von weniger als 1 g/l aufweist, wobei in Schritten nacheinander Chrom (VI)- Verbindungen zu Chrom (III)-Verbindungen reduziert werden, wodurch zusätzlich Fe(III)-Hydroxid iterativ gebildet wird.

19. Verfahren zur Herstellung einer Zusammensetzung gemäß einem der Ansprüche 4 bis 16, wobei das Verfahren die folgenden Schritte umfasst:
a) Bereitstellen von neutralisiertem Rotschlamm,
b) Reduzieren der in dem Rotschlamm enthaltenen Eisen(III)-Verbindungen zu Eisen(II)-Verbindungen und der in dem Rotschlamm enthaltenen Chrom(VI)-Verbindungen zu Chrom(III)-Verbindungen in wässrigen Systemen,
c) Zugeben einer Carbonatverbindung zu der in Schritt b) erhaltenen, Eisen(II)-Verbindungen enthaltenden Lösung unter Bildung von Eisen(II)carbonat,
wobei das Verfahren ferner ein Zugeben eines pH-Puffersystem umfasst, das zum Stabilisieren eines pH-Bereichs, in dem das Eisen(II)carbonat und das daraus entstandene Cr(III) eine Löslichkeit in Wasser bei 25°C von weniger als 1 g/l aufweist, konfiguriert ist.

20. Verfahren nach Anspruch 17 bis 19, wobei das Verfahren ferner ein Rehydratisieren durch Oxidation von Fe(II)-Verbindungen zu Fe(III)-Verbindungen in wässriger Lösung umfasst.

21. Verfahren nach Anspruch 17 bis 20, wobei das Verfahren ferner ein Tempern des modifizierten, chromatarmen Rotschlamms bei einer Temperatur im Bereich von 450 °C bis 700 °C umfasst.

22. Verfahren nach einem der Ansprüche 17 bis 21, wobei das Verfahren ferner ein Behandeln des modifizierten, chromatarmen Rotschlamms mit Säure umfasst.

23. Verfahren nach einem der Ansprüche 17 bis 22, wobei das Verfahren ferner ein thermisches Behandeln des modifizierten, chromatarmen Rotschlamms bei einer Temperatur im Bereich von 150 °C bis 350 °C umfasst.

24. Verfahren nach einem der Ansprüche 17 bis 23, wobei das Verfahren ferner ein Granulieren der Zusammensetzung, insbesondere des modifizierten, chromatarmen Rotschlamms, umfasst.

25. Verfahren nach einem der Ansprüche 17 bis 24, wobei das Verfahren ferner eine Oberflächenbehandlung, insbesondere eine Oberflächenbeschichtung, der Zusammensetzung, insbesondere des modifizierten, chromatarmen Rotschlamms, umfasst.

26. Verfahren nach einem der Ansprüche 17 bis 25, wobei das Verfahren ferner ein Zugeben von mindestens einem der folgenden Mittel umfasst:
- ein weiteres Reduktionsmittel für Cr(VI), das insbesondere aus der Gruppe, bestehend aus Fe, Al und Zn, ausgewählt ist,
- ein Mittel zum Entfernen von Nitrat und Nitrit, das insbesondere aus der Gruppe, bestehend aus Harnstoff und/oder Amidosulfonsäure, ausgewählt ist,
- ein Mittel, das zum Entfernen von Schadstoffen, insbesondere von Schwermetallen, mittels Bildung schwerlöslicher Salze konfiguriert ist, und insbesondere ein Sulfid umfasst, und
- eine organische Substanz, die bei thermischer Behandlung Aktivkohle auf der Oberfläche bildet.

27. Verfahren nach einem der Ansprüche 17 bis 26, wobei das Verfahren ferner einen Trocknungsschritt umfasst, insbesondere in nicht-oxidierender Atmosphäre, wie zum Beispiel unter Inertgas.

28. Verwendung einer Zusammensetzung gemäß einem der Ansprüche 1 bis 16 als Adsorbens, insbesondere als iterativ wirkendes Langzeit-Adsorbens.

29. Verwendung einer Zusammensetzung gemäß einem der Ansprüche 1 bis 16 zur Reinigung von flüssigen und/oder gasförmigen Medien, insbesondere zur Reinigung von Wasser bzw. zur Wasseraufbereitung und/oder zur Reinigung von Luft.

30. Verwendung einer Zusammensetzung gemäß einem der Ansprüche 1 bis 16 zur Entfernung von mindestens einem aus der Gruppe, bestehend aus Nitrat, Nitrit, Phosphat, Schwermetallen, polyaromatische Kohlenwasserstoffen (PAK), Pharmaka-Metaboliten und pathogenen Keimen, aus wässrigen Systemen.

31. Verwendung einer Zusammensetzung gemäß einem der Ansprüche 1 bis 16 zur Entfernung von mindestens einem Stoff aus der Gruppe, bestehend aus Feinstaub, Schadstoffen und Geruchsstoffen, aus gasförmigen Systemen.

32. Verwendung einer Zusammensetzung gemäß einem der Ansprüche 1 bis 16 in der Landwirtschaft, insbesondere zur Wachstumsförderung und/oder als Bodenverbesserungsmittel bzw. zur Bodenentgiftung.

33. Verwendung einer Zusammensetzung gemäß einem der Ansprüche 1 bis 16 als halogenfreies Flammschutzmittel und/oder als Feuerlöschmittel, insbesondere für Flächenbrände, wie Wald- bzw. Torfbrände.

34. Verwendung einer Zusammensetzung gemäß einem der Ansprüche 1 bis 16 in Baumaterialien, insbesondere zu mindestens einem der folgenden:
- zur Wärmedämmung
- zur Wärmespeicherung
- zur Schalldämmung
- zur Abschirmung bzw. Abschwächung von radioaktiven und/oder elektromagnetischen Strahlen

35. Verwendung einer Zusammensetzung gemäß einem der Ansprüche 1 bis 16 als Bohrlochbeschwerungsmittel.

36. Verwendung einer Zusammensetzung gemäß einem der Ansprüche 1 bis 16 als Geopolymer bzw. zur Herstellung von Geopolymeren, insbesondere mittels Kaliwasserglas.

## Claims

1. Composition containing modified, chromate-deficient red mud with a mineral composition of
- 10 to 50 % by weight of iron compounds,
- 12 to 35 % by weight of aluminium compounds,
- 5 to 17 % by weight of silicon compounds,
- 2 to 10 % by weight of titanium dioxide,
- 0,5 to 6 % by weight of calcium compounds,
- 0 to 1 ppm of chromium(VI) compounds and
- optionally, further unavoidable impurities,
wherein the composition, in particular the modified, chromate-deficient red mud, contains a poorly soluble reducing agent for Cr(VI), the poorly soluble reducing agent for Cr(VI) having a solubility in water at pH 7 and 25°C of less than 1 g/l,
the composition further comprising a pH buffer system configured to stabilize a pH range in which the poorly soluble reducing agent for Cr(VI) and the resulting Cr(III) has a solubility in water at 25°C of less than 1 g/l.

2. Composition according to claim 1, **characterized in that** the poorly soluble reducing agent for Cr(VI) has a solubility in water at pH 7 and 25°C of less than 0.1 g/l.

3. Composition according to claim 1 or 2, wherein the poorly soluble reducing agent for Cr(VI) comprises a poorly soluble Fe(II) compound.

4. Composition according to one of the preceding claims, wherein the poorly soluble reducing agent for Cr(VI) comprises iron(II) carbonate (FeCO3).

5. Composition according to one of the preceding claims, wherein a combination of readily soluble and poorly soluble Fe(II) compounds are contained therein, wherein the readily soluble Fe(II) compound has a solubility in water at pH 7 and 25°C of more than 1 g/l and the poorly soluble Fe(II) compound has a solubility in water at pH 7 and 25°C of less than 1 g/l.

6. Composition according to one of the preceding claims, wherein the modified chromate-deficient red mud comprises a modified chromate-deficient, carbonated red mud in which the weight ratio of Fe(II) carbonate to the oxides of iron is at least 1.

7. Composition according to one of the preceding claims, wherein the modified chromate-deficient red mud comprises a modified chromate-deficient, carbonised and rehydrated red mud in which the weight ratio of Fe(II) carbonate to the oxides of iron is at least 1 and the weight ratio of the sum of iron hydroxide and iron oxide hydrate to the oxides of iron is at least 1.

8. Composition according to one of the preceding claims, wherein the modified chromate-deficient red mud has a specific surface area in the range of 2 to 250 m²/g (measured according to BET).

9. Composition according to one of the preceding claims, wherein the modified chromate-deficient red mud has a specific surface area in the range of 10 to 200 m²/g (measured according to BET).

10. Composition according to one of the preceding claims, wherein the modified chromate-deficient red mud has a specific weight of at least 4.5 g/cm³, in particular of at least 5 g/cm³, in particular of at least 5.3 g/cm³.

11. Composition according to one of the preceding claims, wherein the composition, in particular the modified chromate-deficient red mud, is in the form of a granulate.

12. Composition according to one of the preceding claims, wherein the composition, in particular the modified chromate-deficient red mud, has at least partial surface modification, in particular is provided at least partially with a surface coating.

13. Composition according to one of the preceding claims, wherein the composition also contains a further reducing agent for Cr(VI), which is selected in particular from the group consisting of Fe, Al and Zn.

14. Composition according to one of the preceding claims, wherein the composition also contains an agent for removing nitrate and nitrite, which is in particular selected from the group consisting of urea and/or amidosulfonic acid.

15. Composition according to one of the preceding claims, wherein the composition also contains an agent which is configured for removing pollutants, in particular heavy metals, by means of formation poorly soluble salts, and in particular comprises a sulfide.

16. Composition according to one of the preceding claims, wherein the composition also contains an agent, in particular an organic substance, which forms activated carbon on the surface during thermal treatment.

17. Method for producing a composition according to one of claims 1 to 16, wherein the method comprises the following steps:
a) Providing neutralised red mud,
b) Adding a poorly soluble reducing agent for Cr(VI) to the red mud and mixing the poorly soluble reducing agent for Cr(VI) with the red mud, wherein the poorly soluble reducing agent for Cr(VI) has a solubility in water at pH 7 and 25°C of less than 1 g/l,
c) Reduction of chromium(VI) compounds contained in the red mud by means of the poorly soluble reducing agent for Cr(VI) to chromium(III) compounds in aqueous systems to obtain a modified chromate-deficient red mud,
the method further comprises adding a pH buffer system configured to stabilize a pH range in which the poorly soluble reducing agent for Cr(VI) and the resulting Cr(III) has a solubility in water at 25°C of less than 1 g/l.

18. Method according to claim 17, wherein in step b) a poorly soluble Fe(II) compound, in particular Fe(II) carbonate, is added as reducing agent for Cr(VI), the poorly soluble Fe(II) compound having a solubility in water at pH 7 and 25°C of less than 1 g/l, wherein successively in steps chromium (VI) compounds are reduced to chromium (III) compounds, so that additionally Fe(III) hydroxide is formed iteratively.

19. Method for producing a composition according to one of claims 4 to 16, wherein the method comprises the following steps:
a) Providing neutralised red mud,
b) Reduction of the iron(III) compounds contained in the red mud to iron(II) compounds and of the chromium(VI) compounds contained in the red mud to chromium(III) compounds in aqueous systems
c) Addition of carbonate compound to the solution containing iron(II) compounds obtained in step b) to form iron(II) carbonate,
the method further comprises adding a pH buffer system configured to stabilize a pH range in which the iron (II) carbonate and the resulting Cr(III) have a solubility in water at 25°C of less than 1 g/l.

20. Method according to claim 17 to 19, wherein the method further comprises a rehydration by oxidation of Fe(II) compounds to Fe(III) compounds in aqueous solution.

21. Method according to claim 17 to 20, wherein the method further comprises tempering of the modified, chromate-deficient red mud at a temperature in the range of 450°C to 700°C.

22. Method according to one of claims 17 to 21, wherein the method further comprises treatment of the modified, chromate-deficient red mud with acid.

23. Method according to one of claims 17 to 22, wherein the method further comprises thermal treatment of the modified, chromate-deficient red mud at a temperature in the range of 150°C to 350°C.

24. Method according to one of claims 17 to 23, wherein the method further comprises granulation of the composition, in particular the modified, chromate-deficient red mud.

25. Method according to one of claims 17 to 24, wherein the method further comprises a surface treatment, in particular a surface coating, of the composition, in particular the modified, chromate-deficient red mud.

26. Method according to one of claims 17 to 25, wherein the method further comprises an addition of at least one of the following agents:
- a further reducing agent for Cr(VI), which is selected in particular from the group consisting of Fe, Al and Zn,
- an agent for removing nitrate and nitrite, which is selected in particular from the group consisting of urea and/or amidosulfonic acid,
- an agent which is configured to remove pollutants, in particular heavy metals, by means of the formation of poorly soluble salts, and in particular comprising a sulfide, and
- an organic substance, which forms activated carbon on the surface during thermal treatment.

27. Method according to one of claims 17 to 26, wherein the method further comprises a drying step, in particular in non-oxidizing atmosphere, such as for example under inert gas.

28. Use of a composition according to one of claims 1 to 16 as adsorbent, in particular as an iteratively functioning long-term adsorbent.

29. Use of a composition according to one of claims 1 to 16 for the purification of liquid and/or gaseous media, in particular for the purification of water or for water treatment and/or for the purification of air.

30. Use of a composition according to one of claims 1 to 16 for removal from aqueous systems of at least one of the group consisting of nitrate, nitrite, phosphate, heavy metals, polyaromatic hydrocarbons (PAH), pharmaceutical metabolites and pathogenic.

31. Use of a composition according to one of claims 1 to 16 for removal from gaseous systems at least one substance from the group consisting of fine dust, pollutants and odorous substances.

32. Use of a composition according to one of claims 1 to 16 in agriculture, in particular for growth promotion and/or as a soil improver or for soil decontamination.

33. Use of a composition according to one of claims 1 to 16 as halogen-free flame retardant and/or as fire extinguishing agent, in particular for wildfires, such as forest fires or peat fires.

34. Use of a composition according to one of claims 1 to 16 in building materials, in particular for at least one of the following:
- for heat insulation
- for heat storage
- for sound insulation
- for shielding or attenuation of radioactive and/or electromagnetic radiation

35. Use of a composition according to one of claims 1 to 16 as drilling hole weighting.

36. Use of a composition according to one of claims 1 to 16 as a geopolymer or for the production of geopolymers, in particular by means of potassium water glass.

## Revendications

1. Une composition contenant une boue rouge modifiée pauvre en chromate présentant une composition minérale avec
- 10 to 50 % en poids de composés de fer,
- 12 to 35 % en poids de composés d'aluminium,
- 5 to 17 % en poids de composés de silicium,
- 2 to 10 % en poids de dioxyde de titane,
- 0,5 to 6 % en poids de composés de calcium,
- 0 à 1 ppm de composés de chrome(VI) et,
- éventuellement, d'autres impuretés inévitables,
étant précisé que la composition, en particulier de la boue rouge modifiée pauvre en chromate, contient un agent réducteur de Cr(VI) faiblement soluble, l'agent réducteur de Cr(VI) faiblement soluble présentant une solubilité dans l'eau à pH 7 et 25°C de moins de 1 g/l, la composition comprenant en outre un système de tampon pH configuré pour stabiliser une fourchette de pH dans laquelle l'agent réducteur de Cr(VI) faiblement soluble et le Cr(III) qui en résulte présentent une solubilité dans l'eau à 25°C de moins de 1 g/l.

2. Composition selon la Revendication 1, **caractérisée en ce que** l'agent réducteur de Cr(VI) faiblement soluble présente une solubilité dans l'eau à ph7 et 25°C de moins de 0,1 g/l.

3. Composition selon la Revendication 1 ou 2, étant précisé que l'agent réducteur de Cr(VI) faiblement soluble comprend un composé Fe(II) faiblement soluble.

4. Composition selon l'une quelconque des Revendications précédentes, étant précisé que l'agent réducteur de Cr(VI) faiblement soluble comprend du carbonate de fer (II) (FeCO3).

5. Composition selon l'une quelconque des Revendications précédentes, étant précisé qu'une combinaison de composés de Fe(II) facilement soluble et faiblement soluble y sont contenus, étant précisé que le composé de Fe(II) facilement soluble présente une solubilité dans l'eau à ph7 et 25°C de plus de 1 g/l et que le composé de Fe(II) faiblement soluble présente une solubilité dans l'eau à ph7 et 25°C de moins de 1 g/l.

6. Composition selon l'une quelconque des Revendications précédentes, étant précisé que la boue rouge modifiée pauvre en chromate comprend une boue rouge modifiée pauvre en chromate carbonisée dans laquelle le rapport de poids entre le carbonate Fe(II) et les oxydes de fer est d'au moins 1.

7. Composition selon l'une quelconque des Revendications précédentes, étant précisé que la boue rouge modifiée pauvre en chromate comprend une boue rouge modifiée pauvre en chromate carbonisée dans laquelle le rapport de poids entre le carbonate Fe(II) et les oxydes de fer est d'au moins 1 et le rapport de poids entre la somme d'hydroxyde de fer et l'hydrate d'oxyde de fer et les oxydes de fer est d'au moins 1.

8. Composition selon l'une quelconque des Revendications précédentes, étant précisé que la boue rouge modifiée pauvre en chromate présente une superficie spécifique comprise dans la fourchette 2 à 250 m²/g (mesurée selon la méthode BET).

9. Composition selon l'une quelconque des Revendications précédentes, étant précisé que la boue rouge modifiée pauvre en chromate présente une superficie spécifique comprise dans la fourchette 10 à 200 m²/g (mesurée selon la méthode BET).

10. Composition selon l'une quelconque des Revendications précédentes, étant précisé que la boue rouge modifiée pauvre en chromate présente un poids spécifique d'au moins 4,5 g/cm³, en particulier d'au moins 5 g/cm³, en particulier d'au moins 5,3 g/cm³.

11. Composition selon l'une quelconque des Revendications précédentes, étant précisé que la composition, en particulier la boue rouge modifiée pauvre en chromate, présente la forme de granulés.

12. Composition selon l'une quelconque des Revendications précédentes, étant précisé que la composition, en particulier la boue rouge modifiée pauvre en chromate, présente au moins une modification partielle de la surface, en particulier elle est dotée, au moins partiellement, d'un revêtement de surface.

13. Composition selon l'une quelconque des Revendications précédentes, étant précisé que la composition comprend en outre un autre agent réducteur de Cr(VI) sélectionné parmi le groupe Fe, Al et Zn.

14. Composition selon l'une quelconque des Revendications précédentes, étant précisé que la composition comprend en outre un agent destiné à éliminer le nitrate et le nitrite, en particulier sélectionné parmi le groupe comprenant l'urée et / ou l'acide amidosulfonique.

15. Composition selon l'une quelconque des Revendications précédentes, étant précisé que la composition comprend en outre un agent configuré pour éliminer les polluants, en particulier les métaux lourds, au moyen de la formation de sels faiblement solubles, et, en particulier, comprend un sulfide.

16. Composition selon l'une quelconque des Revendications précédentes, étant précisé que la composition comprend en outre un agent, en particulier une substance organique, qui forme du carbone activé sur la surface pendant le traitement thermique.

17. Méthode pour la production d'une composition selon l'une quelconque des Revendications 1 à 16, étant précisé que la méthode comprend les étapes suivantes :
a) fournir une boue rouge neutralisée,
b) ajouter à la boue rouge un agent réducteur de Cr(VI) faiblement soluble et mélanger l'agent réducteur de Cr(VI) faiblement soluble avec la boue rouge, étant précisé que l'agent réducteur de Cr(VI) faiblement soluble présente une solubilité dans l'eau à ph7 et 25°C de moins de 1 g/l.
c) Réduction des composés de chrome(VI) contenus dans la boue au moyen de l'agent réducteur de Cr(VI) faiblement soluble aux composés de chrome (III) dans des systèmes aqueux afin d'obtenir une boue rouge modifiée pauvre en chromate,
la méthode comprend en outre l'ajout d'un système de tampon pH configuré pour stabiliser une fourchette de pH dans laquelle l'agent réducteur de Cr(VI) faiblement soluble et le Cr(III) qui en résulte présentent une solubilité dans l'eau à 25°C de moins de 1 g/l.

18. Méthode selon la Revendication 17 étant précisé qu'à l'étape b) un composé Fe(III) faiblement soluble, en particulier un carbonate Fe(II), est ajouté comme agent réducteur de Cr(VI), le composé Fe(II) faiblement soluble présentant une solubilité dans l'eau à ph 7 et à 25°C de moins de 1 g/l, étant précisé que, successivement, en étapes, des composés de chrome (VI) sont réduits à des composés de chrome (III) de sorte qu'additionnellement de l'hydroxyde de fer(III) est formé de manière itérative.

19. Méthode pour la production d'une composition selon l'une quelconque des Revendications 4 à 16, étant précisé que la méthode comprend les étapes suivantes :
a) fournir une boue rouge neutralisée,
b) réduire les composés de fer(III) contenus dans la boue rouge en composés de fer(II) et les composés de chrome (IV) contenus dans la boue rouge en composés de chrome (III) dans des systèmes aqueux.
c) ajouter un composé de carbonate à la solution contenant des composés de fer(II) obtenus à l'étape b) afin de former un carbonate de fer (II),
la méthode comprend en outre un système de tampon pH configuré pour stabiliser une fourchette de pH dans laquelle le carbonate de fer(II) et le Cr(III) qui en résulte présentent une solubilité dans l'eau à 25°C de moins de 1 g/l.

20. Méthode selon les Revendications 17 à 19, étant précisé que la méthode comprend en outre une réhydratation par oxydation des composés de Fe(II) en composés de Fe(III) dans la solution aqueuse.

21. Méthode selon les Revendications 17 à 20, étant précisé que la méthode comprend en outre la trempe à l'acide de la boue rouge modifiée pauvre en chromate à une température comprise entre 450°C et 700°C.

22. Méthode selon les Revendications 17 à 21, étant précisé que la méthode comprend en outre le traitement à l'acide de la boue rouge modifiée pauvre en chromate.

23. Méthode selon les Revendications 17 à 22, étant précisé que la méthode comprend en outre le traitement thermique de la boue rouge modifiée pauvre en chromate à une température comprise entre 150°C et 350°C.

24. Méthode selon les Revendications 17 à 23, étant précisé que la méthode comprend en outre la granulation de la composition, en particulier la boue rouge modifiée pauvre en chromate.

25. Méthode selon les Revendications 17 à 24, étant précisé que la méthode comprend en outre un traitement de la surface, en particulier l'application d'un revêtement de surface de la composition, en particulier la boue rouge modifiée pauvre en chromate.

26. Méthode selon les Revendications 17 à 25, étant précisé que la méthode comprend en outre l'addition d'au moins un des agents suivants :
- un agent de réduction de Cr(VI) supplémentaire sélectionné en particulier parmi le groupe Fe, Al et Zn,
- un agent destiné à éliminer le nitrate et le nitrite, sélectionné en particulier parmi le groupe comprenant l'urée et / ou l'acide amidosulfonique,
- un agent configuré pour éliminer les polluants, en particulier les métaux lourds, au moyen de la formation de sels faiblement solubles, et, en particulier, comprend un sulfide, et
- une substance organique, qui forme du carbone activé sur la surface pendant le traitement thermique.

27. Méthode selon les Revendications 17 à 26, étant précisé que la méthode comprend en outre une étape de séchage, en particulier dans une atmosphère principalement non-oxydante, comme par exemple dans du gaz inerte.

28. Utilisation d'une composition selon l'une quelconque des Revendications 1 à 16 en tant qu'absorbant, en particulier en tant qu'absorbant à long-terme au fonctionnement itératif.

29. Utilisation d'une composition selon l'une quelconque des Revendications 1 à 16 pour la purification de médias liquides et/ou gazeux, en particulier pour la purification de l'eau ou pour le traitement de l'eau et/ou la purification de l'air.

30. Utilisation d'une composition selon l'une quelconque des Revendications 1 à 16 pour l'élimination de systèmes aqueux d'au moins un élément parmi le groupe composé de nitrate, nitrite, phosphate, métaux lourds, hydrocarbures aromatiques polycycliques (HAP), métabolites pharmaceutiques ou pathogènes.

31. Utilisation d'une composition selon l'une quelconque des Revendications 1 à 16 pour l'élimination de systèmes gazeux d'au moins une substance parmi le groupe composé de poussières fines, polluants et substances odorantes.

32. Utilisation d'une composition selon l'une quelconque des Revendications 1 à 16 dans l'agriculture, en particulier pour la promotion de la croissance et/ou comme amendement de sol ou pour la décontamination du sol.

33. Utilisation d'une composition selon l'une quelconque des Revendications 1 à 16 en tant que retardateur de flammes et/ou agent extincteur sans halogène, en particulier pour les feux de forêt ou les feux de tourbière.

34. Utilisation d'une composition selon l'une quelconque des Revendications 1 à 16 dans des matériaux de construction, en particulier pour au moins un des éléments ci-dessous :
- pour l'isolation thermique
- pour le stockage de chaleur
- pour l'isolation phonique
- pour la protection ou l'atténuation de la radiation radioactive et/ou électromagnétique.

35. Utilisation d'une composition selon l'une quelconque des Revendications 1 à 16 en tant que poids pour le forage de trous.

36. Utilisation d'une composition selon l'une quelconque des Revendications 1 à 16 en tant que géopolymère, en particulier au moyen de verre soluble au potassium.
